# EUROPEAN PATENT APPLICATION

(11) **EP 4 586 531 A1**
(43) Date of publication of application: **16.07.2025**
(21) Application number: 23862141.1
(22) Date of filing: 11.08.2023
(51) Int. Cl.: H04L 5/00

(54) **METHOD AND APPARATUS FOR DETERMINING END OF DATA TRANSMISSION, COMMUNICATION DEVICE, AND READABLE STORAGE MEDIUM**

(30) Priority: 09.09.2022 CN 202211106249
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Conti, Marco
(86) International application number: PCT/CN2023/112752
(87) International publication number: WO 2024/051443

(57) **Abstract**

This application discloses a method and an apparatus for determining end of data transmission, a communication device, and a readable storage medium, pertaining to the field of communications technologies. The method for determining end of data transmission in embodiments of this application includes: performing a first operation, where the performing a first operation includes at least one of the following: performing a first sub-operation, performing a second sub-operation, performing a third sub-operation, performing a fourth sub-operation, and performing a fifth sub-operation; obtaining a first duration or a timing duration of a first timer; obtaining a second duration or a timing duration of a second timer; obtaining first information, where the first information includes at least one of the following: an average duration of time intervals between data packets and a first jitter range; and performing a first behavior based on the first information, including at least one of the following: determining the first duration or the timing duration of the first timer; determining the second duration or the timing duration of the second timer; and determining a maximum duration of transmission time intervals of data packets.

## Description

### CROSS-REFERENCE TO RELATED APPLICATIONS

This application claims priority to Chinese Patent Application No. 202211106249.1, filed in China on September 9, 2022, which is incorporated herein by reference in its entirety.

### TECHNICAL FIELD

This application pertains to the field of communications technologies, and specifically relates to a method and an apparatus for determining end of data transmission, a communication device, and a readable storage medium.

### BACKGROUND

In the related art, one or more data packets can be continuously transmitted in one burst (burst). The burst may have periodic features or aperiodic features. Determining end of a burst can help a network to determine that all data in the burst have arrived so that a terminal can go to sleep; and to guide arrival of a next data burst after a burst period. In this case, how to determine end of data transmission is a problem to be resolved urgently.

### SUMMARY

Embodiments of this application provide a method and an apparatus for determining end of data transmission, a communication device, and a readable storage medium, so as to resolve the problem of how to determine end of data transmission.

In order to resolve the foregoing technical problem, this application is implemented as follows:

According to a first aspect, a method for determining end of data transmission is provided, including:
performing, by a first communication device, a first operation, where the performing a first operation includes at least one of the following:
performing a first sub-operation of the first operation, where the first sub-operation of the first operation includes at least one of the following: determining end of a first burst (burst); determining that a first data packet is an end data packet of the first burst; enabling the first data packet to carry a second end indication; and sending the first data packet, the first data packet carrying a second end indication; where the second end indication includes one of the following: a burst end indication and a data packet set end indication;
performing a second sub-operation of the first operation, where the second sub-operation of the first operation includes at least one of the following: starting or restarting timing of a first timer; and starting or restarting a wait for a first duration;
performing a third sub-operation of the first operation, where the third sub-operation of the first operation includes at least one of the following: stopping timing of the first timer; stopping or waiting for the first duration; determining end of the first burst; determining end of a first data packet set; determining an end data packet of the first burst or the first data packet set; enabling the end data packet to carry a second end indication; sending the end data packet, the end data packet carrying a second end indication; enabling a last received data packet in the first burst to carry a second end indication; sending the last received data packet in the first burst, the data packet carrying a second end indication; constructing a dummy data packet; enabling the dummy data packet to carry a second end indication; and sending the dummy data packet, the dummy data packet carrying a second end indication;
performing a fourth sub-operation of the first operation, where the fourth sub-operation of the first operation includes at least one of the following: starting or restarting timing of a second timer; and starting or restarting a wait for a second duration;
performing a fifth sub-operation of the first operation, where the fifth sub-operation of the first operation includes at least one of the following: stopping timing of a second timer; stopping or waiting for a second duration; determining end of the first data packet set; determining end of a first data unit; determining an end data packet of the first data packet set or the first data unit; enabling an end data packet to carry a data packet set end indication; sending the end data packet, the end data packet carrying a data packet set end indication; enabling a last received data packet in the first data packet set or the first data unit to carry a data packet set end indication; sending the last received data packet in the first data packet set or the first data unit, the data packet carrying a data packet set end indication; constructing a dummy data packet; enabling the dummy data packet to carry a data packet set end indication; and sending the dummy data packet, the dummy data packet carrying a data packet set end indication;
obtaining the first duration or a timing duration of the first timer;
obtaining the second duration or a timing duration of the second timer;
obtaining first information, where the first information includes at least one of the following: an average duration of time intervals between data packets and a first jitter range;
performing a first behavior based on the first information, where the first behavior includes at least one of the following: determining the first duration or the timing duration of the first timer; determining the second duration or the timing duration of the second timer; and determining a maximum duration of transmission time intervals of data packets;
obtaining second information, where the second information includes a maximum duration of time intervals between data packets; and
performing a second behavior based on the second information, where the second behavior includes at least one of the following: determining the first duration or the timing duration of the first timer; and determining the second duration or the timing duration of the second timer; where
the first data packet meets at least one of the following:
   the first data packet is a data packet in the first data unit or a data packet of the first burst; and
   the first data packet is an end data packet of a first data unit; and
   the first data packet carries a first end indication; where
   the first data unit meets at least one of the following: a data unit in the first burst, and a data unit mapped to the first data packet set; and
   the first jitter range is a jitter range of time intervals between the data packets.

According to a second aspect, a method for determining end of data transmission is provided, including:
performing, by a second communication device, a second operation, where the performing a second operation includes at least one of the following:
performing a first sub-operation of the second operation, where the first sub-operation of the second operation includes at least one of the following: determining end of a second burst, and determining that a second data packet is an end data packet of the second burst; enabling the second data packet to carry a burst end indication; and sending the second data packet, the second data packet carrying a burst end indication;
performing a second sub-operation of the second operation, where the second sub-operation of the second operation includes at least one of the following: starting or restarting timing of a third timer; and starting or restarting a wait for a third duration;
performing a third sub-operation of the second operation, where the third sub-operation of the second operation includes at least one of the following: stopping timing of the third timer; stop waiting for the third duration; determining end of the second burst; determining an end data packet of the second burst; enabling the end data packet to carry a burst end indication; sending the end data packet of the second burst, the end data packet carrying a burst end indication; enabling a last received data packet in the second burst to carry a burst end indication; sending the last received data packet in the second burst, the data packet carrying a burst end indication; constructing a dummy data packet; enabling the dummy data packet to carry a burst end indication; and sending the dummy data packet, the dummy data packet carrying a burst end indication;
performing a fourth sub-operation of the second operation, where the fourth sub-operation of the second operation includes at least one of the following: starting or restarting timing of a fourth timer; and starting or restarting a wait for the fourth duration;
performing a fifth sub-operation of the second operation, where the fifth sub-operation of the second operation includes at least one of the following: stopping timing of a fourth timer; stopping or waiting for a fourth duration; determining end of a second data packet set; determining an end data packet of the second data packet set; enabling the end data packet to carry a data packet set end indication; sending the end data packet, the end data packet carrying a data packet set end indication; enabling a last received data packet in the second data packet set to carry a data packet set end indication; sending the last received data packet in the second data packet set, the data packet carrying a data packet set end indication; constructing a dummy data packet; enabling the dummy data packet to carry a data packet set end indication; and sending the dummy data packet, the dummy data packet carrying a data packet set end indication;
obtaining the third duration or a timing duration of the third timer;
obtaining the fourth duration or a timing duration of the fourth timer;
obtaining first information, where the first information includes at least one of the following: an average duration of time intervals between data packets and a first jitter range;
performing a third behavior based on the first information, where the third behavior includes at least one of the following: determining the third duration or the timing duration of the third timer; determining the fourth duration or the timing duration of the fourth timer; and determining a maximum duration of transmission time intervals of data packets;
obtaining second information, where the second information includes a maximum duration of time intervals between data packets; and
performing a fourth behavior based on the second information, where the fourth behavior includes at least one of the following: determining the third duration or the timing duration of the third timer; and determining the fourth duration or the timing duration of the fourth timer; where
the second data packet meets at least one of the following:
   the second data packet is a data packet in a tenth data packet set or a data packet of the second burst;
   the second data packet is an end data packet of the tenth data packet set; and
   the second data packet carries a second end indication; where
   the tenth data packet set is a data packet set in the second burst;
   the second end indication includes one of the following: a burst end indication and a data packet set end indication; and
   the first jitter range is a jitter range of time intervals between the data packets.

According to a third aspect, a method for determining end of data transmission is provided, including:
performing, by a third communication device, a third operation, where the third operation includes at least one of the following:
obtaining fifth information;
determining sixth information based on the fifth information, where the sixth information includes at least one of the following: protocol description information or a packet filter of a second object; a first requirement; first feature information; a second requirement; second feature information; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating a burst information-based operation, information for indicating to monitor the end data packet of the burst, information for indicating to add a second end indication to the end data packet of the burst, and burst information corresponding to a burst to which a data packet belongs and used for indicating to mark the data packet;
determining and/or transmitting third information and/or fourth information based on at least one of the fifth information and a local configuration; and
binding a policy control and charging PCC rule to an independent QoS flow in a case that the PCC rule contains the fifth information or the information related to the data burst operation; where
the third information includes at least one of the following: a first requirement; first feature information; protocol description information or a packet filter of a second object; a first duration or a timing duration of a first timer; a second duration or a timing duration of a second timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation or information for indicating a burst information-based operation, information for indicating to monitor the end data packet of the burst, information for indicating to add a second end indication to the end data packet of the burst, and burst information corresponding to a burst to which a data packet belongs and used for indicating to mark the data packet;
the fourth information includes at least one of the following: a second requirement, second feature information, a third duration or a timing duration of a third timer, a fourth duration or a timing duration of a fourth timer, an average duration of time intervals between data packets, a maximum duration of time intervals between data packets, and a first jitter range; and
the fifth information includes at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; and a first jitter range; where
the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst; and
the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst; where
the first feature information includes at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and
the second feature information includes at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, where M is an integer greater than or equal to 1; where
the packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet; where
the protocol description information is used for at least one of the following:
   describing a protocol or protocol header used for the second object;
   describing a protocol or protocol header used for monitoring the end data packet of the burst; and
   indicating that the first protocol or the first protocol header supports providing at least one of the following: a first end indication, information used for identifying the end data packet of the burst, and information used for adding a second end indication to the data packet; where
   the first jitter range is a jitter range of time intervals between the data packets;
   the first object or the second object includes at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
   the tenth object includes at least one of the following: a first service data flow, a first QoS subflow, a first QoS flow, or a first QoS flow group; and the first QoS flow group includes a first QoS flow.

According to a fourth aspect, a method for determining end of data transmission is provided, including:
obtaining, by a fourth communication device, seventh information; and
performing, the fourth communication device, a fourth operation based on the seventh information; where
the seventh information includes at least one of the following:
   a first jitter range;
   an average duration of time intervals between data packets;
   a maximum duration of time intervals between data packets;
   feature information of a service data flow;
   protocol description information or a packet filter of a second object;
   information for indicating that a first protocol or a first protocol header supports providing at least one of the following: a first end indication, information for identifying an end data packet of a burst, and information for marking a second end indication for a data packet;
   information for indicating activation of a terminal energy-saving operation;
   information for indicating a data burst-based operation;
   information for indicating to add a second end indication to the end data packet of the burst; and
   burst information corresponding to a burst to which a data packet belongs and used for indicating to mark the data packet; where
   the feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and
   the performing a fourth operation includes at least one of the following:
      determining fifth information; and
      sending the fifth information; where
      the fifth information includes at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet;
      the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
      the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
      the first feature information includes at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1;
      the second feature information includes at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, where M is an integer greater than or equal to 1;
      the packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet;
      the protocol description information is used for at least one of the following:
         describing a protocol or protocol header used for the second object;
         describing a protocol or protocol header used for monitoring the end data packet of the burst; and
         indicating that the first protocol or the first protocol header supports providing at least one of the following: a first end indication, information used for identifying the end data packet of the burst, and information used for adding a second end indication to the data packet;
         the first jitter range is a jitter range of time intervals between the data packets;
         the first object includes at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
         the tenth object includes at least one of the following: a first service data flow, a first QoS subflow, a first QoS flow, or a first QoS flow group; and the first QoS flow group includes a first QoS flow; where
         the first jitter range is a jitter range of time intervals between the data packets in the burst.

According to a fifth aspect, a method for determining end of data transmission is provided, including:
disclosing, by a fifth communication device, a first network capability or disclosing a first service; where
the first network capability is used for calling and/or providing seventh information by a sixth communication device, and the first service is allowed for inputting the seventh information; where
the seventh information includes at least one of the following:
   a first jitter range; an average duration of time intervals between data packets; a maximum duration of time intervals between data packets; feature information of a service data flow; protocol description information or a packet filter of a second object; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet; where
   the feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and
   The first jitter range is a jitter range of time intervals between the data packets.

According to a sixth aspect, a method for determining end of data transmission is provided, including:
sending, by a sixth communication device, seventh information; where
the seventh information includes at least one of the following:
   a first jitter range;
   an average duration of time intervals between data packets;
   a maximum duration of time intervals between data packets; and feature information of a service data flow;
   protocol description information or a packet filter of a second object;
   information for indicating that a first protocol or a first protocol header supports providing at least one of the following: a first end indication, information for identifying an end data packet of a burst, and information for marking a second end indication for a data packet;
   information for indicating activation of a terminal energy-saving operation;
   information for indicating a data burst-based operation;
   information for indicating to add a second end indication to the end data packet of the burst; and
   burst information corresponding to a burst to which a data packet belongs and used for indicating to mark the data packet; where
   the feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and
   The first jitter range is a jitter range of time intervals between the data packets.

According to a seventh aspect, an apparatus for determining end of data transmission is provided, including:
a first execution module, configured to perform a first operation, where the performing a first operation includes at least one of the following:
performing a first sub-operation of the first operation, where the first sub-operation of the first operation includes at least one of the following: determining end of a first burst (burst); determining that a first data packet is an end data packet of the first burst; enabling the first data packet to carry a second end indication; and sending the first data packet, the first data packet carrying a second end indication; where the second end indication includes one of the following: a burst end indication and a data packet set end indication;
performing a second sub-operation of the first operation, where the second sub-operation of the first operation includes at least one of the following: starting or restarting timing of a first timer; and starting or restarting a wait for a first duration;
performing a third sub-operation of the first operation, where the third sub-operation of the first operation includes at least one of the following: stopping timing of the first timer; stopping or waiting for the first duration; determining end of the first burst; determining end of a first data packet set; determining an end data packet of the first burst or the first data packet set; enabling the end data packet to carry a second end indication; sending the end data packet, the end data packet carrying a second end indication; enabling a last received data packet in the first burst to carry a second end indication; sending the last received data packet in the first burst, the data packet carrying a second end indication; constructing a dummy data packet; enabling the dummy data packet to carry a second end indication; and sending the dummy data packet, the dummy data packet carrying a second end indication;
performing a fourth sub-operation of the first operation, where the fourth sub-operation of the first operation includes at least one of the following: starting or restarting timing of a second timer; and starting or restarting a wait for a second duration;
performing a fifth sub-operation of the first operation, where the fifth sub-operation of the first operation includes at least one of the following: stopping timing of a second timer; stopping or waiting for a second duration; determining end of the first data packet set; determining end of a first data unit; determining an end data packet of the first data packet set or the first data unit; enabling an end data packet to carry a data packet set end indication; sending the end data packet, the end data packet carrying a data packet set end indication; enabling a last received data packet in the first data packet set or the first data unit to carry a data packet set end indication; sending the last received data packet in the first data packet set or the first data unit, the data packet carrying a data packet set end indication; constructing a dummy data packet; enabling the dummy data packet to carry a data packet set end indication; and sending the dummy data packet, the dummy data packet carrying a data packet set end indication;
obtaining the first duration or a timing duration of the first timer;
obtaining the second duration or a timing duration of the second timer;
obtaining first information, where the first information includes at least one of the following: an average duration of time intervals between data packets and a first jitter range;
performing a first behavior based on the first information, where the first behavior includes at least one of the following: determining the first duration or the timing duration of the first timer; determining the second duration or the timing duration of the second timer; and determining a maximum duration of transmission time intervals of data packets;
obtaining second information, where the second information includes a maximum duration of time intervals between data packets; and
performing a second behavior based on the second information, where the second behavior includes at least one of the following: determining the first duration or the timing duration of the first timer; and determining the second duration or the timing duration of the second timer; where
the first data packet meets at least one of the following:
   the first data packet is a data packet in the first data unit or a data packet of the first burst; and
   the first data packet is an end data packet of a first data unit; and
   the first data packet carries a first end indication; where
   the first data unit meets at least one of the following: a data unit in the first burst, and a data unit mapped to the first data packet set; and
   the first jitter range is a jitter range of time intervals between the data packets.

According to an eighth aspect, an apparatus for determining end of data transmission is provided, including:
a second execution module, configured to perform a second operation, where the performing a second operation includes at least one of the following:
performing a first sub-operation of the second operation, where the first sub-operation of the second operation includes at least one of the following: determining end of a second burst, and determining that a second data packet is an end data packet of the second burst; enabling the second data packet to carry a burst end indication; and sending the second data packet, the second data packet carrying a burst end indication;
performing a second sub-operation of the second operation, where the second sub-operation of the second operation includes at least one of the following: starting or restarting timing of a third timer; and starting or restarting a wait for a third duration;
performing a third sub-operation of the second operation, where the third sub-operation of the second operation includes at least one of the following: stopping timing of the third timer; stop waiting for the third duration; determining end of the second burst; determining an end data packet of the second burst; enabling the end data packet to carry a burst end indication; sending the end data packet of the second burst, the end data packet carrying a burst end indication; enabling a last received data packet in the second burst to carry a burst end indication; sending the last received data packet in the second burst, the data packet carrying a burst end indication; constructing a dummy data packet; enabling the dummy data packet to carry a burst end indication; and sending the dummy data packet, the dummy data packet carrying a burst end indication;
performing a fourth sub-operation of the second operation, where the fourth sub-operation of the second operation includes at least one of the following: starting or restarting timing of a fourth timer; and starting or restarting a wait for the fourth duration;
performing a fifth sub-operation of the second operation, where the fifth sub-operation of the second operation includes at least one of the following: stopping timing of a fourth timer; stopping or waiting for a fourth duration; determining end of a second data packet set; determining an end data packet of the second data packet set; enabling the end data packet to carry a data packet set end indication; sending the end data packet, the end data packet carrying a data packet set end indication; enabling a last received data packet in the second data packet set to carry a data packet set end indication; sending the last received data packet in the second data packet set, the data packet carrying a data packet set end indication; constructing a dummy data packet; enabling the dummy data packet to carry a data packet set end indication; and sending the dummy data packet, the dummy data packet carrying a data packet set end indication;
obtaining the third duration or a timing duration of the third timer;
obtaining the fourth duration or a timing duration of the fourth timer;
obtaining first information, where the first information includes at least one of the following: an average duration of time intervals between data packets and a first jitter range;
performing a third behavior based on the first information, where the third behavior includes at least one of the following: determining the third duration or the timing duration of the third timer; determining the fourth duration or the timing duration of the fourth timer; and determining a maximum duration of transmission time intervals of data packets;
obtaining second information, where the second information includes a maximum duration of time intervals between data packets; and
performing a fourth behavior based on the second information, where the fourth behavior includes at least one of the following: determining the third duration or the timing duration of the third timer; and determining the fourth duration or the timing duration of the fourth timer; where
the second data packet meets at least one of the following:
the second data packet is a data packet in a tenth data packet set or a data packet of the second burst;
the second data packet is an end data packet of the tenth data packet set; and
the second data packet carries a second end indication; where
the tenth data packet set is a data packet set in the second burst;
the second end indication includes one of the following: a burst end indication and a data packet set end indication; and
the first jitter range is a jitter range of time intervals between the data packets.

According to a ninth aspect, an apparatus for determining end of data transmission is provided, including:
a third execution module, configured to perform a third operation, where the third operation includes at least one of the following:
obtaining fifth information;
determining sixth information based on the fifth information, where the sixth information includes at least one of the following: protocol description information or a packet filter of a second object; a first requirement; first feature information; a second requirement; second feature information; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; and a first jitter range; and
sending the third information and/or fourth information; where
the third information includes at least one of the following: a first requirement; first feature information; protocol description information or a packet filter of a second object; a first duration or a timing duration of a first timer; a second duration or a timing duration of a second timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation or information for indicating a burst information-based operation, information for indicating to monitor the end data packet of the burst, information for indicating to add a second end indication to the end data packet of the burst, and burst information corresponding to a burst to which a data packet belongs and used for indicating to mark the data packet;
the fourth information includes at least one of the following: a second requirement, second feature information, a third duration or a timing duration of a third timer, a fourth duration or a timing duration of a fourth timer, an average duration of time intervals between data packets, a maximum duration of time intervals between data packets, and a first jitter range; and
the fifth information includes at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; and a first jitter range; where
the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst; and
the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst; where
the first feature information includes at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and
the second feature information includes at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, where M is an integer greater than or equal to 1; where
the packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet; where
the protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet; where
the first jitter range is a jitter range of time intervals between the data packets;
the first object or the second object includes at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
the tenth object includes at least one of the following: a first service data flow, a first QoS subflow, a first QoS flow, or a first QoS flow group; and the first QoS flow group includes a first QoS flow.

According to a tenth aspect, an apparatus for determining end of data transmission is provided, including:
an obtaining module, configured to obtain seventh information; and
a fourth execution module, configured to perform a fourth operation based on the seventh information; where
the seventh information includes at least one of the following:
   a first jitter range;
   an average duration of time intervals between data packets;
   a maximum duration of time intervals between data packets;
   feature information of a service data flow;
   protocol description information or a packet filter of a second object;
   information for indicating that a first protocol or a first protocol header supports providing at least one of the following: a first end indication, information for identifying an end data packet of a burst, and information for marking a second end indication for a data packet;
   information for indicating activation of a terminal energy-saving operation;
   information for indicating a data burst-based operation;
   information for indicating to add a second end indication to the end data packet of the burst; and
   burst information corresponding to a burst to which a data packet belongs and used for indicating to mark the data packet; where
   the feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and
   the performing a fourth operation includes at least one of the following:
      determining fifth information; and
      sending the fifth information; where
      the fifth information includes at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet;
      the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
      the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
      the first feature information includes at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1;
      the second feature information includes at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, where M is an integer greater than or equal to 1;
      the packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet;
      the protocol description information is used for at least one of the following:
         describing a protocol or protocol header used for the second object;
         describing a protocol or protocol header used for monitoring the end data packet of the burst; and
         indicating that the first protocol or the first protocol header supports providing at least one of the following: a first end indication, information used for identifying the end data packet of the burst, and information used for adding a second end indication to the data packet;
         the first jitter range is a jitter range of time intervals between the data packets;
         the first object includes at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
         the tenth object includes at least one of the following: a first service data flow, a first QoS subflow, a first QoS flow, or a first QoS flow group; and the first QoS flow group includes a first QoS flow; where
         the first jitter range is a jitter range of time intervals between the data packets in the burst.

According to an eleventh aspect, an apparatus for determining end of data transmission is provided, including:
a fifth execution module, configured to disclose a first network capability or disclose a first service, where
the first network capability is used for calling and/or providing seventh information by a sixth communication device, and the first service is allowed for inputting seventh information; where
the seventh information includes at least one of the following:
   a first jitter range;
   an average duration of time intervals between data packets;
   a maximum duration of time intervals between data packets;
   feature information of a service data flow;
   protocol description information or a packet filter of a second object;
   information for indicating that a first protocol or a first protocol header supports providing at least one of the following: a first end indication, information for identifying an end data packet of a burst, and information for marking a second end indication for a data packet;
   information for indicating activation of a terminal energy-saving operation;
   information for indicating a data burst-based operation;
   information for indicating to add a second end indication to the end data packet of the burst; and
   burst information corresponding to a burst to which a data packet belongs and used for indicating to mark the data packet; where
   the feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and
   the first jitter range is a jitter range of time intervals between the data packets.

According to a twelfth aspect, an apparatus for determining end of data transmission is provided, including:
a sending module, configured to send seventh information; where
the seventh information includes at least one of the following: a first jitter range; an average duration of time intervals between data packets; a maximum duration of time intervals between data packets; feature information of a service data flow; protocol description information or a packet filter of a second object; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet;
the feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and
the first jitter range is a jitter range of time intervals between the data packets.

According to a thirteenth aspect, a communication device is provided, where the communication device includes a processor and a memory, where a program or instructions capable of running on the processor are stored in the memory. When the program or the instructions are executed by the processor, the steps of the method according to the first aspect are implemented, or the steps of the method according to the second aspect are implemented, or the steps of the method according to the third aspect are implemented, or the steps of the method according to the fourth aspect are implemented, or the steps of the method according to the fifth aspect are implemented, or the steps of the method according to the sixth aspect are implemented.

According to a fourteenth aspect, a readable storage medium is provided, where a program or instructions are stored in the readable storage medium, and in a case that the program or the instructions are executed by a processor, the steps of the method according to the first aspect are implemented, or the steps of the method according to the second aspect are implemented, or the steps of the method according to the third aspect are implemented, or the steps of the method according to the fourth aspect are implemented, or the steps of the method according to the fifth aspect are implemented, or the steps of the method according to the sixth aspect are implemented.

According to a fifteenth aspect, a chip is provided, where the chip includes a processor and a communication interface, the communication interface is coupled to the processor, and the processor is configured to run a program or instructions to implement the steps of the method according to the first aspect, or the steps of the method according to the second aspect, or the steps of the method according to the third aspect, or the steps of the method according to the fourth aspect, or the steps of the method according to the fifth aspect, or the steps of the method according to the sixth aspect.

According to a sixteenth aspect, a computer program/program product is provided, where the computer program/program product is stored in a storage medium, and the computer program/program product is executed by at least one processor to implement the steps of the method according to the first aspect, or the steps of the method according to the second aspect, or the steps of the method according to the third aspect, or the steps of the method according to the fourth aspect, or the steps of the method according to the fifth aspect, or the steps of the method according to the sixth aspect.

In the embodiments of this application, end of data transmission can be determined, and whether end of the burst is detected or marked can be determined, so as to achieve the purpose of energy saving for a terminal.

### BRIEF DESCRIPTION OF DRAWINGS

FIG. 1 is a block diagram of a wireless communication system to which embodiments of this application are applicable;
FIG. 2A is a first schematic diagram of a burst according to an embodiment of this application;
FIG. 2B is a second schematic diagram of a burst according to an embodiment of this application;
FIG. 2C is a third schematic diagram of a burst according to an embodiment of this application;
FIG. 3 is a flowchart of a method for determining end of data transmission according to an embodiment of this application;
FIG. 4 is a flowchart of another method for determining end of data transmission according to an embodiment of this application;
FIG. 5 is a flowchart of another method for determining end of data transmission according to an embodiment of this application;
FIG. 6 is a flowchart of another method for determining end of data transmission according to an embodiment of this application;
FIG. 7 is a flowchart of another method for determining end of data transmission according to an embodiment of this application;
FIG. 8 is a flowchart of another method for determining end of data transmission according to an embodiment of this application;
FIG. 9 is a flowchart for determining end of a burst according to Embodiment 1 of this application;
FIG. 10 is a flowchart for determining end of a burst according to Embodiment 2 of this application;
FIG. 11 is a flowchart for determining end of a burst according to Embodiment 3 of this application;
FIG. 12 is a schematic structural diagram of an apparatus for determining end of data transmission according to an embodiment of this application;
FIG. 13 is a schematic structural diagram of another apparatus for determining end of data transmission according to an embodiment of this application;
FIG. 14 is a schematic structural diagram of another apparatus for determining end of data transmission according to an embodiment of this application;
FIG. 15 is a schematic structural diagram of another apparatus for determining end of data transmission according to an embodiment of this application;
FIG. 16 is a schematic structural diagram of another apparatus for determining end of data transmission according to an embodiment of this application;
FIG. 17 is a schematic structural diagram of another apparatus for determining end of data transmission according to an embodiment of this application; and
FIG. 18 is a schematic structural diagram of a communication device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

One or more data packets such as protocol data unit sets (Protocol Data Unit Set, PDU set) can be continuously transmitted in one burst. There may be an interval period between bursts. Determining end (END) of a burst can help a radio access network (Radio Access Network, RAN) to determine that all data in the burst have arrived so that a terminal can go to sleep; and to guide arrival of a next data burst after a burst period.

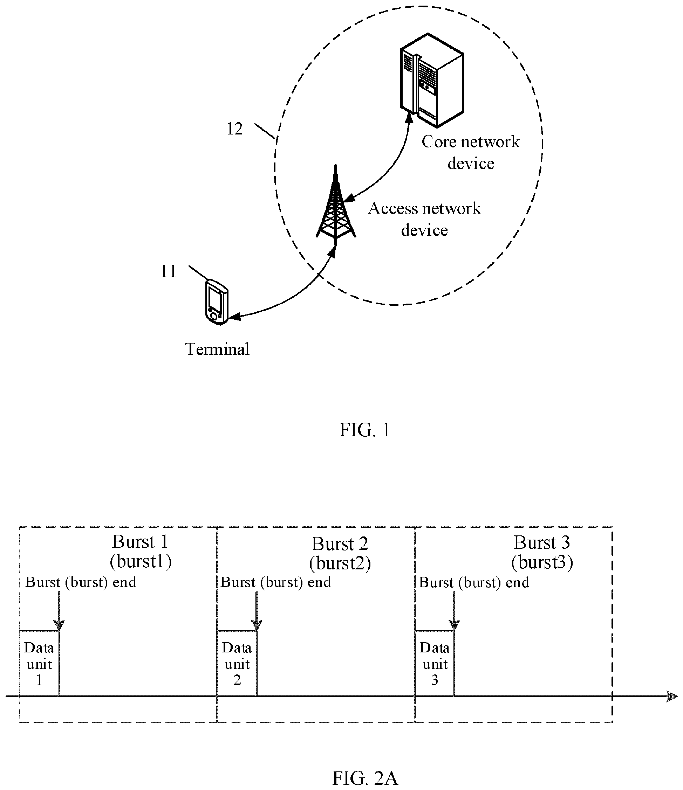

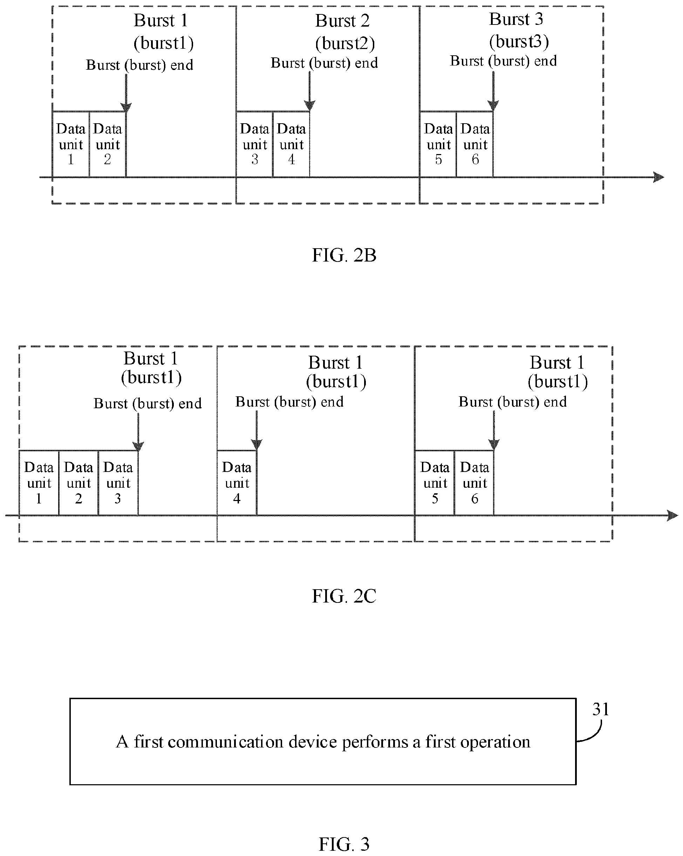

To determine end of a periodic burst, the following problems still need to be resolved:
Problem 1: It is not clear how to obtain information of a burst end from a header of transport protocols such as real time protocol (Real Time Protocol, RTP)/secure real time protocol (Secure Real Time Protocol, SRTP). At present, RTP transmission is performed based on a network abstraction layer unit (NAL Unit), which is commonly known as a data unit (media unit). For each NAL unit, each data unit includes one or more data packets in an RTP extension protocol header. The 1st data packet of a data unit may carry a "START" tag. The last data packet of the NAL unit may carry "END", that is, an end indication. Then, end of the NAL unit may be determined upon reception of a data packet carrying "END". For a burst, there are three cases:
Case 1: Only one data unit is transmitted in a burst, and a PDU carrying "END" may be considered as the end PDU of the burst, as shown in FIG. 2A.
Case 2: Multiple data units are transmitted in a burst, and the number of data units transmitted in each burst is stable, for example, 2. In this case, a PDU carrying "END" in the 2nd data unit may be considered as an end PDU of the burst, as shown in FIG. 2B.
Case 3: Multiple data units are transmitted in a burst, and the number of data units transmitted in each burst is unstable, for example, sometimes 5, sometimes 1, and sometimes 7, which is irregular. In this case, a PDU carrying "END" has no reference for determining end of the burst, as shown in FIG. 2C.

Optionally, a solution to case 1 is: An AF informs a 5G system a packet sending rule in a burst (5G System burst, 5GS burst), such as whether an RTP extension protocol header is supported or not, or whether only one NAL unit is stably delivered in the burst, so that an UPF may consider a PDU carrying "END" as a burst END PDU.

Optionally, a solution to case 2 is: An AF informs a packet sending rules in a 5GS burst, such as whether an RTP extension protocol header is supported or not, and whether only N NAL units are stably delivered in the burst, so that the UPF may consider a PDU carrying "END" in the N-th NAL unit as a burst END PDU.

Optionally, solutions to case 3 may be as follows:
Solution 1: A UPF needs to wait for a first duration after receiving data packets of each NAL unit. When the first duration expires, it may be considered as a burst END. However, in this case, all previously received data packets of the NAL Unit have been sent to a RAN, and the UPF needs to create a dummy data packet such as a dummy PDU carrying a burst End and send it to the RAN.
Solution 2: The RAN may wait and then make confirmation. For example, when an inactive time (inactive timer) is greater than a first duration, the RAN may not wait any longer and go to sleep.

Sub-problem 1: How to determine the first duration.

Solution: 5GS statistics or an AF provides a jitter range (jitter range), where the jitter range is a jitter range of an interval delay between every two NAL units or every two PDUs. For example, an arrival time for data packets in a burst is about 20 microseconds, and an arrival time interval over 20ms may be considered as jitter. For example, the jitter range is ±2ms, and the first duration may be set to 2ms or slightly larger than 2ms. Because the PDU being beyond the jitter range is a small probability event, it may be referenced not to wait for such small probability delayed packet.

In addition, the first duration should be less than a burst period minus a second time period, where the second time period is a time period between an arrival time of the last packet in the burst and a start time of the burst.

Sub-problem 2: Energy saving is mainly implemented by sleeping of the UE. Only in a case that both an uplink burst and a downlink burst end, the UE may enter a sleep state. At present, a base station does not know that the uplink burst is over.

Solution 1: In an uplink direction, the UE may inform the base station whether data transmission in a burst is over or not.

Solution 2: The RAN may wait and then make confirmation. For example, when the inactive time (inactive timer) is greater than the first duration, the RAN may not wait any longer and go to sleep.

Problem 3: In related technologies, an SMF determines itself whether to monitor an end data packet of a burst and mark a burst end indication. It is not clear whether a third-party application or a PCF may request or require such an operation. In addition, part of RTP protocols support provision of a burst end indication. But it is not supported by other RTP protocols. In a case that the RTP protocol does not support a burst end indication, an end data packet of a burst cannot be determined. In this case, it is meaningless to instruct a PSA UPF to monitor or mark an end data packet of a burst, which is just a waste of resources. The problem of how the network can distinguish the foregoing scenarios and determine whether to request marking end of data transmission needs to be solved.

FIG. 1 is a block diagram of a wireless communication system to which the embodiments of this application are applicable. The wireless communication system includes a terminal 11 and a network-side device 12. The terminal 11 may be a mobile phone, a tablet computer (Tablet Personal Computer), a laptop computer (Laptop Computer), a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Networks, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in some embodiments of this application. For example, when specific capability indication information transmitted by a device is not received, it can be deduced that the device does not support the capability.

Optionally, transmitting may include broadcasting, broadcasting through a system message, or returning a response after receiving the request.

In an optional embodiment of this application, the communication device may include at least one of the following: a communication network element and a terminal.

In an embodiment of this application, the communication network element may include at least one of the following: a core network network element and a radio access network network element.

In the embodiments of this application, the core network (Core Network, CN) network element (CN network element) may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like.

In the embodiments of this application, a RAN network element may include, but is not limited to, at least one of the following: a radio access networks device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access-point (Access Point, AP) device, a wireless local area network (Wireless Local Area Networks, WLAN) node, or an N3IWF.

The base station may be a base transceiver station (BTS, Base Transceiver Station) in global system for mobile communications (Global System for Mobile Communications, GSM) or CDMA, or may be a NodeB (NodeB) in WCDMA, or may be an evolved NodeB (eNB or e-NodeB, evolutional Node B) in LTE or a 5G base station (gNB). This is not limited in the embodiments of this disclosure.

In an optional embodiment of this application, the terminal may include a relay that supports a terminal function, and/or a terminal that supports a relay function. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in this embodiments of this application.

In an embodiment of this application, a data burst-based operation (referred to as data burst operation for short) may alternatively be referred to as data burst-based control (referred to as data burst control for short).

In an embodiment of this application, a burst-based operation, a data burst-based operation, or a burst information-based operation includes at least one of the following:
an operation based on burst information (which may be referred to as a burst information-based operation for short);
a terminal energy-saving operation;
monitoring an end data packet of a burst;
adding a second end indication to the end data packet of the burst;
monitoring burst information corresponding to a data packet;
marking a data packet by using burst information corresponding to a burst to which the data packet belongs;
marking a burst end indication for a second packet header of the data packet based on information for determining a burst end indication in a first packet header of the data packet; and
applying burst information.

In an implementation, the operation based on burst is the same as the operation based on burst information. It is not difficult to understand that the basis of the operation based on Burst is to obtain Burst information.

In another implementation, the operation based on burst includes the operation based on burst information.

In an embodiment of this application, the terminal energy-saving operation includes the terminal energy-saving operation based on the burst information (such as the end indication of the burst). It is not difficult to understand that the terminal may save energy before end of the N-th Burst and start of the (N+1)-th burst.

In an embodiment of this application, the operation based on the burst information includes at least one of the following:
performing an energy-saving operation on the terminal based on the burst information; and
an operation based on a burst end indication.

In an embodiment of this application, the burst information includes at least one of the following:
a burst size;
burst end indication information;
burst start indication information;
a sequence number of a data packet in a burst;
a sequence number of a burst;
a duration of a burst;
an interval between bursts or an interval between a burst and a next burst; and
a period of a burst.

Information for identifying the end data packet of the burst may be referred to as information for monitoring the end data packet of the burst.

In an embodiment of this application, the end indication is a short name of information for indicating end.

In an implementation, the burst end indication is a short name of information indicating end of a burst.

In an implementation, the data packet set end indication is a short name of information indicating end of a data packet set.

In an implementation, the end indication may alternatively be referred to as an end tag. The end data packet may be a data packet carrying an end indication, or a last data packet of the burst (such as a last arrived data packet).

In an implementation, the data unit end indicator is a short name of information for indicating end of a data unit.

Burst end means end of data transmission before start of a next burst or end of data transmission of the burst.

Burst and burst stand for a same meaning, both of which mean data burst (data burst). Burst may be a group of PDUs generated and sent by an application over a period of time. One burst may include multiple PDU sets.

In an embodiment of this application, a time interval between data packets is a transmission or arrival time interval between two consecutive data packets.

In an implementation, a time interval between data packets in the burst is a transmission or arrival time interval between two consecutive data packets in one burst.

In an implementation, a time interval between data packets in a data packet set is a transmission or arrival time interval between two consecutive data packets in one data packet set.

In an optional embodiment of this application, the data packet set may be simply referred to as a data set. A data packet set includes one or more data packets. Optionally, the data packet set has a boundary.

In an optional embodiment of this application, the data packet set is a concept in a cellular mobile communication network. The data packet set may be a paragraph formed by one or more data packets or a set formed by one or more data packets in a tunnel (such as a quality of service (Quality of Service, QoS) flow, a QoS subflow, and a radio bearer).

In an optional embodiment of this application, the data packet may be a PDU packet data unit.

In an optional embodiment of this application, the data packet set may be one of the following: a packet data unit set PDU set, one instance of the PDU set, a PDU set type, one instance of the PDU set type, a data segment or a data packet set in a tunnel (such as a QoS flow, a QoS subflow, and a radio bearer).
(1) In an implementation, a PDU set of one type may include multiple PDU set instances. A PDU set of one type may be identified by a PDU set identifier (such as a QoS identifier at a PDU set level). Multiple different PDU set instances of a same PDU set may be distinguished by data packet set sequence numbers (such as PDU set sequence numbers).
(2) In another implementation, one PDU set type may include multiple PDU sets. The PDU set is an instance of the PDU set type. The PDU set type may be identified by a PDU set identifier (such as a QoS identifier at a PDU set level). Multiple different PDU sets of a same PDU set type may be distinguished by data packet set sequence numbers (such as PDU set sequence numbers).

In an optional embodiment of this application, the data packet set type may be one of the following: a packet data unit set (PDU Set), and a tunnel (such as a QoS flow, a QoS subflow, and a radio bearer). One data packet set type may correspond to multiple data packet sets. The data packet set is an instance of the data packet set type. The data packet set type may be identified by a data packet set type identifier. The data packet set type identifier is, for example, a QoS identifier at a data packet set level. In this case, multiple data packet sets may be distinguished by data packet set sequence numbers.

In an implementation, the one or more data packet sets have a same or different type. Data packet sets of different types may be distinguished by data packet set identifiers. Different data packet sets of a same type may be distinguished by data packet set sequence numbers.

In an optional embodiment of this application, a PDU set is formed by one or more PDUs, and the PDUs carry a payload (such as a frame or a video slice (video slice)) of one information element generated at an application program level. In some implementations, the application layer requires all PDUs in a PDU set to use a corresponding information element. In other implementations, when some PDUs are lost, the application layer may still recover all or part of the information element.

In an implementation, the PDU set is a concept or data unit in a mobile communication network.

In an optional embodiment of this application, a service data flow (such as service data flow) may be simply referred to as a data flow, a flow, or a data flow. Optionally, the data unit is a data unit in a service data flow.

In an optional embodiment of this application, the data unit is also a collection of one or more data packets in the service data flow. Optionally, the data unit has a boundary.

In an optional embodiment of this application, the data unit may be embodied by a data flow. For example, the data unit is described by using description information of the data flow.

In an optional embodiment of this application, the data unit is a data unit of the application layer and is sent by an application client or an application server. A data unit is a collection of one or more data packets.

In an optional embodiment of this application, the data unit may be a media unit.

In an optional embodiment of this application, the data unit or data unit type includes but is not limited to at least one of the following: a NAL (such as network abstraction layer unit) unit, a group of pictures (Group of pictures, GoP), a video frame, a video slice (video slice), and description information of a tile, a field of view (Field of view, FOV), degree of freedom (Degree of Freedom, DoF), an audio frame, and tactile information. The multiple data units are of a same type (for example, multiple continuous B frames) or different types (for example, I frame, P frame, and B frame). The multiple data units are of a same type (for example, multiple continuous B frames) or different types (for example, I frame, P frame, and B frame).
(1) In an implementation, one data unit may include multiple data unit instances. One data unit may be identified by description information of the data unit. Multiple different data unit instances of a same data unit may be distinguished by boundary information of the data unit (such as a start tag and an end indication).
(2) In an implementation, one data unit type may include multiple data units. The data unit is an instance of the data unit type. Data units of one type may be identified by description information of the data units. Multiple different data units of a same data unit type may be distinguished by boundary information of the data units (such as a start tag and an end indication).

In an embodiment of this application, QoS information includes at least one of the following: a QoS class indicator (such as a QoS Class identifier (QoS Class Identifier, QCI) or 5G QoS identifier (5G QoS Identifier, 5QI)), a QoS rule, QoS flow description information, QoS context information, and QoS parameter information. The QoS flow description information may include QoS parameter information, and the QoS context information may include QoS parameter information.

In an embodiment of this application, data packet filtering information is included in the QoS rule.

In an embodiment of this application, QoS parameter information may include at least one of the following: QoS class indicator information, priority information, a packet delay budget, a packet error rate, a maximum data burst, and whether guaranteed bit rate (Guaranteed Bit Rate, GBR) is required, whether there is a default average window requirement, a default average window, and GBR-related QoS parameter information.

In an embodiment of this application, the tunnel is of a GBR type, indicating that the QoS information of the tunnel includes GBR-related QoS parameters.

In an embodiment of this application, the GBR-related QoS parameter information may include at least one of the following: uplink and/or downlink guaranteed flow bit rate (Guaranteed Flow Bit Rate, GFBR), uplink and/or downlink maximum flow bit rate (Maximum Flow Bit Rate, MFBR), uplink and/or downlink GBR, and uplink and/or downlink maximum bit rate (Maximum Bit Rate, MBR).

In an embodiment of this application, the QoS information requirement may be one of the following: QoS information and QoS requirement. The QoS information may be one of the following: QoS information requirement and QoS requirement.

In an embodiment of this application, the QoS class indicator may be referred to as 5QI, QCI (QoS class indicator), or other names, which is not limited in this application. 5QI may be used as a QFI (QoS flow identifier).

In an embodiment of this application, the packet filter information may be used to map data onto a tunnel of the network. The packet filter information may also be referred to as TFT, SDF, or other names, which is not specifically limited in this application.

In this embodiment of this application, the data packet filtering information, the packet filter information, and the packet filter may represent the same meaning, and may be used interchangeably. The QoS parameter information and the QoS parameter may represent the same meaning, and may be used interchangeably. The QoS class indicator information and the QoS class indicator may represent the same meaning and may be used interchangeably. The QoS flow description information and the QoS flow description may represent the same meaning and may be used interchangeably. The priority information, QoS priority information, and priority may represent the same meaning and may be used interchangeably.

In an embodiment of this application, the communication network element may include at least one of the following: a core network network element and a radio access network network element.

The following specifically describes in detail a method and an apparatus for determining end of data transmission, a communication device, and a readable storage medium provided in the embodiments of this application through some embodiments and application scenarios thereof with reference to the accompanying drawings.

Refer to FIG. 3. An embodiment of the present invention provides a method for determining end of data transmission, which is applied to a first communication device. The first communication device includes but is not limited to a RAN network element, a CN network element, or a terminal UE, and the CN network element includes but is not limited to a UPF and the like. As shown in FIG. 3, the method includes the following steps.

Step 31: The first communication device performs a first operation.

In this embodiment, the performing a first operation includes at least one of the following:
performing a first sub-operation of the first operation, where the first sub-operation of the first operation includes at least one of the following: determining end of a first burst (burst); determining that a first data packet is an end data packet of the first burst; enabling the first data packet to carry a second end indication; and sending the first data packet, the first data packet carrying a second end indication; where the second end indication includes one of the following: a burst end indication and a data packet set end indication;
performing a second sub-operation of the first operation, where the second sub-operation of the first operation includes at least one of the following: starting or restarting timing of a first timer; and starting or restarting a wait for a first duration;
performing a third sub-operation of the first operation, where the third sub-operation of the first operation includes at least one of the following: stopping timing of the first timer; stopping or waiting for the first duration; determining end of the first burst; determining end of a first data packet set; determining an end data packet of the first burst or the first data packet set; enabling the end data packet to carry a second end indication; sending the end data packet, the end data packet carrying a second end indication; enabling a last received data packet in the first burst to carry a second end indication; sending the last received data packet in the first burst, the data packet carrying a second end indication; constructing a dummy data packet; enabling the dummy data packet to carry a second end indication; and sending the dummy data packet, the dummy data packet carrying a second end indication;
performing a fourth sub-operation of the first operation, where the fourth sub-operation of the first operation includes at least one of the following: starting or restarting timing of a second timer; and starting or restarting a wait for a second duration;
performing a fifth sub-operation of the first operation, where the fifth sub-operation of the first operation includes at least one of the following: stopping timing of a second timer; stopping or waiting for a second duration; determining end of the first data packet set; determining end of a first data unit; determining an end data packet of the first data packet set or the first data unit; enabling an end data packet to carry a data packet set end indication; sending the end data packet, the end data packet carrying a data packet set end indication; enabling a last received data packet in the first data packet set or the first data unit to carry a data packet set end indication; sending the last received data packet in the first data packet set or the first data unit, the data packet carrying a data packet set end indication; constructing a dummy data packet; enabling the dummy data packet to carry a data packet set end indication; and sending the dummy data packet, the dummy data packet carrying a data packet set end indication;
obtaining the first duration or a timing duration of the first timer;
obtaining the second duration or a timing duration of the second timer;
obtaining first information, where the first information includes at least one of the following: an average duration of time intervals between data packets and a first jitter range;
performing a first behavior based on the first information, where the first behavior includes at least one of the following: determining the first duration or the timing duration of the first timer; determining the second duration or the timing duration of the second timer; and determining a maximum duration of transmission time intervals of data packets;
obtaining second information, where the second information includes a maximum duration of time intervals between data packets; and
performing a second behavior based on the second information, where the second behavior includes at least one of the following: determining the first duration or the timing duration of the first timer; and determining the second duration or the timing duration of the second timer.

The first data packet meets at least one of the following:
the first data packet is a data packet in the first data unit or a data packet of the first burst; and
the first data packet is an end data packet of a first data unit; and
the first data packet carries a first end indication.

The first data unit meets at least one of the following: a data unit in the first burst, and a data unit mapped to the first data packet set.

The first jitter range is a jitter range of time intervals between data packets.

In an implementation, when the first communication device is a core network network element (such as a UPF), the data packet (such as a first data packet and a dummy data packet) is a downlink data packet. The sending the dummy data packet includes one of the following: sending the dummy data packet to a RAN network element and sending the dummy data packet to an N3 or N9 interface.

In an implementation, when the first communication device is a terminal, the data packet (such as the first data packet or the dummy data packet) is an uplink data packet. The sending the dummy data packet includes sending the dummy data packet to a RAN.

In an implementation, when the first communication device is a RAN network element, the data packet (such as the first data packet or the dummy data packet) is an uplink and/or downlink data packet. The sending the dummy data packet includes one of the following: sending the dummy data packet to a RAN network element and sending the dummy data packet to an N3 or N9 interface.

In an implementation, in the first sub-operation of the first operation, the first communication device determines end of the first burst by receiving the first data packet.

In an implementation, the first communication device receives the first information and/or second information from a source end, and the source end includes a third communication device.

In an implementation, there is a gap between bursts, and the burst may have periodic features or may not have periodic features. Each burst contains one or more data units, and the first burst represents a specific burst. Each burst has a data transmission start and a data transmission end.

The burst end indicates end of data transmission in a burst.

The burst end indication is used to indicate one of the following: data transmission in the burst is completed, and a data packet carrying the burst end indication is a last data packet of the burst.

The data packet set end indication is used to indicate one of the following: data transmission in the data packet set is completed, and a data packet carrying the data packet set end indication is a last data packet of the data packet set.

The data unit end indicator is used to indicate one of the following: data transmission in the data unit is completed, and a data packet carrying the data unit end indicator is a last data packet of the data unit.

In an implementation, the end data packet of the burst means no other data packets of the burst following the end data packet.

In an implementation, the first duration is configured on the first communication device, or the first duration is received.

In an implementation, the second duration is configured on the first communication device, or the second duration is received.

In an implementation, in the first operation, enabling the data packet (such as the first data packet) to carry the second end indication includes setting the second end indication in a first header of the data packet. In an implementation, the first packet header is, for example, a GTP-U packet header.

A time interval between data packets in the burst is a transmission or arrival time interval between two consecutive data packets in one burst.

For an average duration of time intervals between data packets in one burst, for example, a time interval between the 1st data packet and the 2nd data packet is 10 microseconds, a time interval between the 2nd data packet and the 3rd data packet is 15 microseconds, and a time interval between the 3rd data packet and the 4th data packet is 20 microseconds. In this case, the average duration of the time intervals is 15 microseconds, and a maximum duration of the time intervals is 20 microseconds.

In an implementation, restarting timing of the m-th timer includes: a timing duration of the m-th timer is restored to a maximum value or an initial state. For example, the maximum duration of the m-th timer is 20 microseconds, and a data packet is received when the time has passed 10 microseconds. In this case, the timer returns to an initial state for re-timing, that is, forward timing means returning to a state of 0 seconds, and backward timing means returning to a state of 20 microseconds. A value of m is one of the following: 1, 2, 3, and 4.

In an implementation, the first duration is the same as or different from the second duration.

In an implementation, the first timer is the same as or different from the second timer.

In an implementation, in a case that all data in one burst are mapped onto one data packet set, end of the burst is also end of the data packet set. For example, one burst has N data units, and the N data units are mapped onto one data packet set. Then, a last data packet of the N-th data unit is an end data packet of the burst or the data packet set. In this scenario, a burst end is equivalent to a data packet set end. The first sub-operation, the second sub-operation, and the third sub-operation described above may be used to determine a burst end or a data packet set end in this scenario.

In another implementation, in a case that the data unit and the data packet set are mapped one by one, the data unit end is also the data packet set end. For example, one burst has N data units, and the N data units are mapped onto N data packet sets. In this scenario, the burst end is not equivalent to the data packet set end. The fourth sub-operation and the fifth sub-operation described above may be used to determine the data packet set end in this scenario.

Optionally, the determining an end data packet of the first burst or the first data packet set includes at least one of the following:
if the first communication device still has a received data packet of the first burst, using, by the first communication device, a last received data packet in the first burst as the end data packet of the first burst or the first data packet set; and
if the first communication device already has no data packet of the first burst, creating, by the first communication device, one dummy data packet and using the dummy data packet as the end data packet of the first burst or the first data packet set; and/or
the first duration is used for one of the following: determining end of a burst, determining end of a data unit, and determining end of a data packet set; or the first duration is used to indicate a maximum duration of timing of the first timer; and/or
the first timer is a timer used for one of the following: determining end of burst data transmission, determining end of data unit transmission, and determining end of data packet set transmission; and/or
the second duration is used for one of the following: determining end of a data unit and determining end of a data packet set; or the second duration is used to indicate a maximum duration of timing of the second timer; and/or
the second timer is a timer for determining end of data unit transmission or end of data packet set transmission.

Optionally, the first jitter range includes at least one of the following:
a maximum value in jitter positive values of time intervals between data packets; and
a minimum value in jitter negative values of time intervals between data packets.

In an implementation, the first jitter range is [+5, -5], a maximum value in jitter positive values is +5, and a minimum value in jitter negative values is -5.

For example, an average duration of time intervals is 15 microseconds, and it may be determined based on the first jitter range and the average duration of the time intervals that the maximum duration of the time intervals is 20 microseconds. It is not difficult to understand that: in a case that the first communication device has received the M-th data packet in the burst, if the (M+1)-th data packet has not been received for more than 20 microseconds, the burst has ended with a high probability. That is, it may be determined that the M-th data packet is an end data packet of the burst.

Optionally, the first end indication is one of the following:
an end indication in a first protocol header;
an end indication of a data unit; and
an end indication of a burst.

The first protocol header includes one of the following: an Internet Protocol (Internet Protocol, IP) protocol header of a data packet of the terminal or a protocol header within the IP protocol header, a real-time transport protocol RTP protocol header, an RTP protocol header extension, a secure real-time transport protocol SRTP protocol header, an SRTP protocol header extension, or header information of a protocol indicated by the protocol description information; and/or the first protocol header does not include a general packet radio services (General Packet Radio Services, GPRS) tunneling protocol for the user plane (GPRS Tunnelling Protocol for the user plane, GTP-U) header.

In an implementation, the end indication in the first protocol header includes an end indication of a burst in the first protocol header.

In an implementation, the protocol description information may be used for at least one of the following:
describing a protocol or protocol header used for the service data flow;
describing a protocol or protocol header used for monitoring the end data packet of the burst; and
indicating that the first protocol or the first protocol header supports providing at least one of the following pieces of information: a first end indication, information used for identifying the end data packet of the burst, and information used for adding a second end indication to the data packet.

In an implementation, an IP data packet of the terminal is transmitted in a GTP-U pipeline, and there is a GTP-U header in addition to an IP header of the data packet of the terminal. The first protocol is an IP header of the data packet of the terminal or other protocol headers inside the IP header.

In an implementation, the first protocol includes one of the following: an IP layer protocol or a protocol above the IP layer of the data packet of the terminal, an RTP protocol, and an SRTP protocol; and/or, the first protocol does not include a GPRS tunneling protocol GTP-U for the user plane.

Optionally, the performing a first sub-operation of the first operation includes:
performing, by the first communication device, the first sub-operation of the first operation in a case that a first condition is met; where
the first condition includes at least one of the following:
   a first requirement has been obtained, where the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
   the number of data units transmitted in each burst is the same, only one data unit is transmitted in each burst, or N data units are transmitted in each burst; and
   the first data unit further meets: being the N-th data unit or a last data unit in the first burst;
   a service data flow supports a first protocol header, or a data packet of the service data flow has a first protocol header;
   a packet filter of a quality of service QoS flow includes information describing at least one of the following: a first protocol, a first protocol header, and an end indication in the first protocol header;
   the first communication device supports reading the first protocol header;
   protocol description information or a packet filter of a second object has been obtained;
   a first protocol or the first protocol header supports providing at least one of the following: a first end indication, information used for identifying the end data packet of the burst, and information used for marking a second end indication for the data packet;
   information for indicating activation of a terminal energy-saving operation has been obtained;
   information for indicating a burst-based operation or information for indicating a burst information-based operation has been obtained;
   information for indicating to monitor the end data packet of the burst has been obtained;
   information for indicating to add a second end indication to the end data packet of the burst has been obtained; and
   burst information, corresponding to a burst to which a data packet belongs and used for indicating to mark the data packet, has been obtained; where
   N is an integer greater than or equal to 1. The service data flow is a service data flow to which the first data unit belongs. The service data flow is a service data flow corresponding to the first burst. That is, the first burst is a burst of most service data flows.

Optionally, the first data unit being a data unit in the first burst includes one of the following:
the first media unit is the first arrived data unit in the first burst;
the first media unit is the N-th arrived data unit in the first burst; and
the first media unit is a last arrived data unit in the first burst.

Optionally, the performing a second sub-operation of the first operation includes:
performing, by the first communication device, the second sub-operation of the first operation in a case that a second condition is met; where
the second condition includes at least one of the following:
   the first burst starts;
   the 1st data packet in the first burst has been received;
   a data packet has been received before the first timer or the first duration expires;
   a data packet has been received before the first timer or the first duration expires, and the data packet meets at least one of the following: being not a last data packet of the first data packet set or the first burst, being a data packet carrying no first end indication, and being a data packet in the N-th data unit;
   a duration of the first burst ends before the first timer or the first duration expires; and
   a next burst starts before the first timer or the first duration expires.

In some embodiments, the first burst is a burst in the data flow. Start of the first burst represents start of data transmission of the first burst. The first communication device may determine start of a specific burst based on at least one of the following: the 1st data packet of the burst has been received, and a start time of the burst has been inferred based on a period of the burst. For example, if the burst is the M-th burst in the data flow and the period of the burst is Y, the start time of the burst may be inferred based on M×Y.

Optionally, when the burst has periodic features, a duration of the burst is a burst period.

In an implementation, the first burst is a specific burst. The data packet in the first burst is one of the following: a data packet carrying a first end indication in the first burst; and a data packet not carrying a first end indication in the first burst.

Optionally, the performing a third sub-operation of the first operation includes:
performing, by the first communication device, the third sub-operation of the first operation in a case that a third condition is met; where
the third condition includes at least one of the following:
   the first timer expires or the first duration for waiting expires; and
   a last data packet of the first data packet set or the first burst has been received before the first timer or the first duration expires.

In an implementation, the last received data packet in the first burst is a data packet that triggers "the last timing of the first timer or waiting for the first duration in the first burst".

It is not difficult to understand that the first timer and waiting for a first duration is started or restarted in a case that the first communication device has received the M-th data packet in the first burst. If the (M+1)-th data packet has not been received until the first timer expires or a wait for the first duration expires, it may be considered that the first burst ends. That is, it may be determined that the M-th packet is an end data packet of the first burst.

Optionally, the last data packet of the first data packet set or the first burst is one of the following: an end data packet of the N-th data unit in the burst; and a data packet carrying a first end indication in the N-th data unit in the burst, where N is an integer greater than or equal to 1.

In an implementation, the first communication device learns that data of N data units may be transmitted in the first burst, and the N-th data unit is a last data unit of the first burst. The end data packet of the N-th data unit is an end data packet of the burst.

In an implementation, the end data packet of the N-th data unit may be a data packet carrying a first end indication in the N-th data unit.

In another implementation, the end data packet of the N-th data unit may be an end data packet of the data unit determined by performing the fifth sub-operation.

Optionally, the second condition or the third condition further includes at least one of the following:
the number of data units transmitted in each burst is the same, only one data unit is transmitted in each burst, or N data units are transmitted in each burst; and
the first data unit further meets: being the N-th data unit or a last data unit in the burst.

Optionally, in a case that the third sub-operation includes at least one of constructing a dummy data packet, enabling the dummy data packet to carry a data packet set end indication, and sending the dummy data packet, the dummy data packet carrying a data packet set end indication, the third condition further includes:
the first communication device already has no data packet in the first burst.

In an implementation, the first communication device forwards the data packet after receiving the data packet. If the first timer expires or a wait for the first duration expires, a previously received data packet of the first burst may have already been forwarded, and the data packet in the first burst is no longer cached in the first communication device. In this case, in order to notify the second communication device, it is not difficult to understand that a dummy data packet (dummy PDU) needs to be constructed to carry a second end indication (a burst end indication or a data packet set end indication).

In an implementation, the dummy data packet further carries information indicating that the data packet is a dummy data packet.

Optionally, the performing a fourth sub-operation of the first operation includes:
performing, by the first communication device, the fourth sub-operation of the first operation in a case that a fourth condition is met; where
the fourth condition includes at least one of the following:
   the first data packet set starts;
   the 1st data packet of the first data packet set or the first data unit has been received;
   a data packet has been received before the second timer or the second duration expires;
   a data packet of the first data packet set or the first data unit has been received before the second timer or the second duration expires, and the data packet meets at least one of the following: being not a last data packet of the first data unit and not carrying a first end indication;
   a duration of the first data packet set ends before the second timer or the second duration expires; and
   a next data packet set starts before the second timer or the second duration expires.

Optionally, when transmission of data packet sets (for example, only one data packet set is transmitted in one burst, and the burst period may also be considered as a transmission period of the data packet set) has periodic features, a duration of the data packet set is a transmission period of the data packet set.

Optionally, the performing a fifth sub-operation of the first operation includes:
performing, by the first communication device, the fifth sub-operation of the first operation in a case that a fifth condition is met; where
the fifth condition includes at least one of the following:
   the second timer expires or the second duration for waiting expires; and
   a last data packet of the first data packet set or the first data unit has been received before the second timer or the second duration expires.

The last data packet of the first data packet set or the first data unit is one of the following: a data packet carrying a first end indication in the first data unit.

In some embodiments, in a case that the fifth sub-operation of the first operation includes at least one of constructing a dummy data packet, enabling the dummy data packet to carry a data packet set end indication, and sending the dummy data packet, the dummy data packet carrying a data packet set end indication, the fifth condition further includes:
the first communication device already has no data packet in the first data packet set or the first burst.

Optionally, the performing a first operation includes:
obtaining, by the first communication device, third information and performing the first sub-operation, the second sub-operation, the third sub-operation, the fourth sub-operation, and/or the fifth sub-operation of the first operation based on the third information.

The third information includes at least one of the following:
a first requirement, where the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
first feature information;
protocol description information or a packet filter of a second object;
the first duration or the timing duration of the first timer;
the second duration or the timing duration of the second timer;
an average duration of time intervals between data packets;
a maximum duration of time intervals between data packets;
a first jitter range;
information for indicating that a first protocol or a first protocol header supports providing at least one of the following: a first end indication, information used for identifying the end data packet of the burst, and information used for marking a second end indication for the data packet;
information for indicating activation of a terminal energy-saving operation;
information for indicating a burst-based operation or information for indicating a burst information-based operation;
information for indicating to monitor the end data packet of the burst;
information for indicating to add a second end indication to the end data packet of the burst; and
burst information corresponding to a burst to which a data packet belongs and used for indicating to mark the data packet.

The first feature information includes at least one of the following:
a period of a burst;
information for indicating at least one: the number of data units transmitted in each burst is the same, the number of data units transmitted in each burst is different, only one data unit is transmitted in each burst, or N data units are transmitted in each burst; and
information indicating at least one of the following: all data in one burst are mapped onto one data packet set, all data units in one burst are mapped onto one data packet set, and one data unit is mapped onto one data packet set; where
N is an integer greater than or equal to 1.

The second object includes at least one of the following: a first service data flow, a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object.

The tenth object includes at least one of the following: a first service data flow, a first QoS subflow, a first QoS flow, and a first QoS flow group.

The packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet.

The protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet.

In an implementation, the first communication device receives third information from a source end, and the source end includes a third communication device.

The tenth object includes at least one of the following: a first service data flow, a first QoS subflow, a first QoS flow, and a first QoS flow group; and the first QoS flow group includes a first QoS flow.

Optionally, the service data flow is a service data flow to which the first data unit belongs.

Optionally, the first QoS flow is a QoS flow mapped by the first service data flow.

Optionally, the burst is a burst in the tenth object.

Optionally, the data packet set is a data packet set in the tenth object.

Optionally, the first requirement is a corresponding first requirement of the tenth object.

Optionally, the first feature information is first feature information of the tenth object. The first feature information may also be referred to as first service feature information.

For the packet filter of the second object, a data packet conforming to the packet filter may be considered as a data packet of the second object. For example, the burst ends, and the packet filter is an end indication in the first protocol header (for example, a value of an END bit is 1). Therefore, provided that an end indication in the first protocol header (for example, the value of the END bit is 1) is carried, it may be considered as the burst end data packet or the data unit end data packet.

Optionally, a maximum duration of time intervals between the data packets includes at least one of the following: a maximum duration of time intervals between the data packets in a burst, and a maximum duration of time intervals between the data packets in a data packet set; and/or
an average duration of time intervals between the data packets includes at least one of the following: an average duration of time intervals between the data packets in a burst, and an average duration of time intervals between the data packets in a data packet set; and/or
a jitter range of time intervals between the data packets includes at least one of the following: a jitter range of time intervals between the data packets in a burst, and a jitter range of time intervals between the data packets in a data packet set.

Optionally, the performing a first behavior based on the first information includes at least one of the following:
performing, the first communication device, at least one of the following based on an average duration of time intervals between data packets in a burst and/or a jitter range of time intervals between data packets in the burst: determining the first duration or the timing duration of the first timer; determining a maximum duration of the transmission time intervals of the data packets in the burst; determining a maximum duration of transmission time intervals of data packets in a data packet set; and
performing, the first communication device, at least one of the following based on an average duration of time intervals between the data packets in the data packet set and/or a jitter range of the time intervals between the data packets in the data packet set: determining the second duration or the timing duration of the second timer; and determining the maximum duration of the transmission time intervals of the data packets in the data packet set.

Optionally, the performing a second behavior based on the second information includes at least one of the following:
determining, by the first communication device, the first duration or the timing duration of the first timer based on a maximum duration of transmission time intervals of data packets in a burst or a maximum duration of transmission time intervals of data packets in a data packet set; and
determining, by the first communication device, the second duration or the timing duration of the second timer based on the maximum duration of the transmission time intervals of the data packets in the data packet set.

It is not difficult to understand that according to this embodiment, end of data transmission can be determined, and whether end of the burst is detected or marked can be determined, so as to achieve the purpose of energy saving for a terminal.

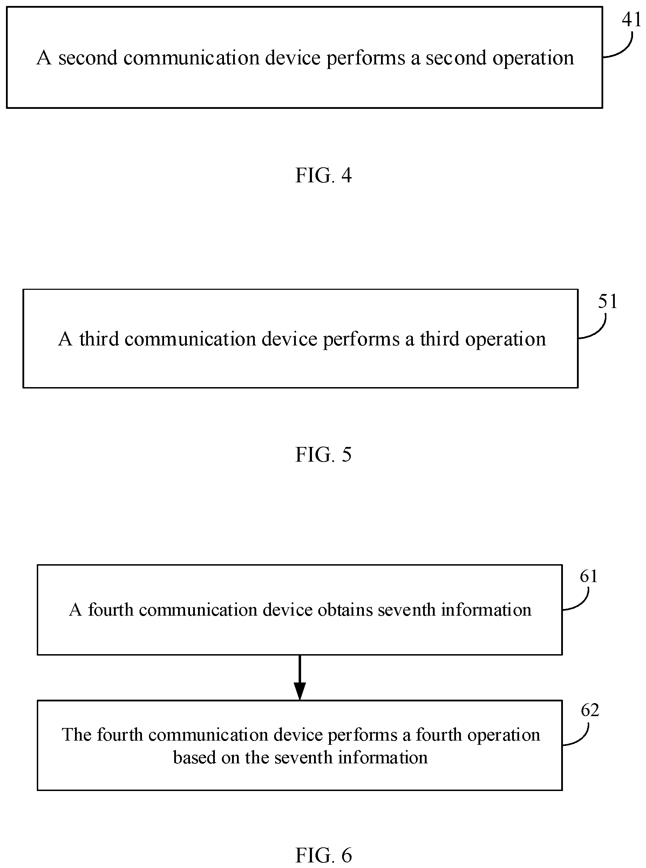

Refer to FIG. 4. An embodiment of the present invention provides a method for determining end of data transmission, which is applied to a second communication device. The second communication device includes but is not limited to a RAN network element and a terminal. As shown in FIG. 4, the method includes the following steps.

Step 41: The second communication device performs a second operation.

In this embodiment, the performing a second operation includes at least one of the following:
performing a first sub-operation of the second operation, where the first sub-operation of the second operation includes at least one of the following: determining end of a second burst, and determining that a second data packet is an end data packet of the second burst; enabling the second data packet to carry a burst end indication; and sending the second data packet, the second data packet carrying a burst end indication;
performing a second sub-operation of the second operation, where the second sub-operation of the second operation includes at least one of the following: starting or restarting timing of a third timer; and starting or restarting a wait for a third duration;
performing a third sub-operation of the second operation, where the third sub-operation of the second operation includes at least one of the following: stopping timing of the third timer; stop waiting for the third duration; determining end of the second burst; determining an end data packet of the second burst; enabling the end data packet to carry a burst end indication; sending the end data packet of the second burst, the end data packet carrying a burst end indication; enabling a last received data packet in the second burst to carry a burst end indication; sending the last received data packet in the second burst, the data packet carrying a burst end indication; constructing a dummy data packet; enabling the dummy data packet to carry a burst end indication; and sending the dummy data packet, the dummy data packet carrying a burst end indication;
performing a fourth sub-operation of the second operation, where the fourth sub-operation of the second operation includes at least one of the following: starting or restarting timing of a fourth timer; and starting or restarting a wait for the fourth duration;
performing a fifth sub-operation of the second operation, where the fifth sub-operation of the second operation includes at least one of the following: stopping timing of a fourth timer; stopping or waiting for a fourth duration; determining end of a second data packet set; determining an end data packet of the second data packet set; enabling the end data packet to carry a data packet set end indication; sending the end data packet, the end data packet carrying a data packet set end indication; enabling a last received data packet in the second data packet set to carry a data packet set end indication; sending the last received data packet in the second data packet set, the data packet carrying a data packet set end indication; constructing a dummy data packet; enabling the dummy data packet to carry a data packet set end indication; and sending the dummy data packet, the dummy data packet carrying a data packet set end indication;
obtaining the third duration or a timing duration of the third timer;
obtaining the fourth duration or a timing duration of the fourth timer;
obtaining first information, where the first information includes at least one of the following: an average duration of time intervals between data packets and a first jitter range;
performing a third behavior based on the first information, where the third behavior includes at least one of the following: determining the third duration or the timing duration of the third timer; determining the fourth duration or the timing duration of the fourth timer; and determining a maximum duration of transmission time intervals of data packets;
obtaining second information, where the second information includes a maximum duration of time intervals between data packets; and
performing a fourth behavior based on the second information, where the fourth behavior includes at least one of the following: determining the third duration or the timing duration of the third timer; and determining the fourth duration or the timing duration of the fourth timer.

The second data packet meets at least one of the following:
the second data packet is a data packet in a tenth data packet set or a data packet of the second burst;
the second data packet is an end data packet of the tenth data packet set; and
the second data packet carries a second end indication.

The tenth data packet set is a data packet set in the second burst;
the second end indication includes one of the following: a burst end indication and a data packet set end indication; and
the first jitter range is a jitter range of time intervals between the data packets.

Optionally, the second burst is a specific burst.

The second data packet set is a specific data packet set.

In an implementation, the second communication device receives the first information and/or second information from a source end, and the source end includes a third communication device.

In an implementation, the third duration is configured on the second communication device, or the third duration is received.

In an implementation, the fourth duration is configured on the second communication device, or the fourth duration is received.

In an implementation, in the second operation, enabling the data packet (such as the second data packet) to carry a burst end indication includes: setting the burst end indication in a second header of the data packet.

In an implementation, the enabling the data packet to carry a data packet set end indication includes setting a data packet set end indication in the second header of the data packet.

The second header includes one of the following: a packet data convergence protocol (Packet Data Convergence Protocol, PDCP) header, a radio link control (Radio Link Control, RLC) header, and a medium access control (Medium Access Control, MAC) header.

In an implementation, a time interval between data packets in the burst is a transmission or arrival time interval between two consecutive data packets in one burst.

In an implementation, the restarting timing of the third timer includes: restoring the timing duration of the third timer to a maximum value or an initial state. For example, a maximum duration of the third timer is 20 microseconds, and a data packet is received when the time has passed 10 microseconds. In this case, the timer returns to an initial state and starts re-timing, that is, forward timing means returning to a state of 0 seconds, and backward timing means returning to a state of 20 microseconds.

In an implementation, the restarting timing of the fourth timer includes: the timing duration of the fourth timer is restored to a maximum value or an initial state. For example, a maximum duration of the fourth timer is 20 microseconds, and when the time has passed 10 microseconds, the data packet is received. In this case, the timer returns to an initial state and starts re-timing, that is, forward timing means returning to a state of 0 seconds, and backward timing means returning to a state of 20 microseconds.

In an implementation, the third duration is the same as or different from the fourth duration.

In an implementation, the third timer is the same as or different from the fourth timer.

Optionally, the third duration is used for determining end of a burst; or the third duration is used to indicate a maximum duration of timing of the third timer;
the third timer is a timer for determining end of burst data transmission;
the fourth duration is used for determining end of a data packet set; or the fourth duration is used to indicate a maximum duration of timing of the fourth timer; and
the fourth timer is a timer for determining end of data transmission of the data packet set.

Optionally, the performing a first sub-operation of the second operation includes:
performing, by the second communication device, the first sub-operation of the second operation in a case that a sixth condition is met; where
the sixth condition includes at least one of the following:
   a second requirement has been obtained, where the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
   the number of data packet sets of each burst is the same, only one data packet set is transmitted in each burst, or M data packet sets are transmitted in each burst; and
   the tenth data packet set further meets: being the M-th data packet set or the last data packet set in the second burst; where M is an integer greater than or equal to 1.

Optionally, the performing a second sub-operation of the second operation includes:
performing, by the second communication device, the second sub-operation of the second operation in a case that a seventh condition is met; where
the seventh condition includes at least one of the following:
   the second burst starts;
   the 1st data packet in the second burst has been received;
   a data packet has been received before the third timer or the third duration expires;
   a data packet has been received before the third timer or the third duration expires, and the data packet meets at least one of the following: being not a last data packet of the second burst, being a data packet carrying no second end indication, and being a data packet in the M-th data packet set;
   a duration of the second burst ends before the third timer or the third duration expires; and
   a next burst starts before the third timer or the third duration expires.

The second end indication includes one of the following: a burst end indication and a data packet set end indication.

In an implementation, in a case that all data in one burst are mapped onto one data packet set, end of the burst is also end of the data packet set. For example, one burst has N data units, and the N data units are mapped onto one data packet set. Then, a last data packet of the N-th data unit is an end data packet of the burst or the data packet set. In this scenario, a burst end is equivalent to a data packet set end. The third sub-operation described above may be used to determine the burst end in this scenario.

In another implementation, in a case that the data unit and the data packet set are mapped one by one, the data unit end is also the data packet set end. For example, one burst has N data units, and the N data units are mapped onto N data packet sets. In this scenario, the burst end is not equivalent to the data packet set end.

In an implementation, the second burst is a specific burst in the data flow. Start of the second burst represents start of data transmission of the second burst. The second communication device may determine start of a specific burst based on at least one of the following: the 1st data packet of the burst has been received, and a start time of the burst has been inferred based on a period of the burst. For example, if the burst is the M-th burst in the data flow and the period of the burst is Y, the start time of the burst may be inferred based on M×Y.

When the burst has periodic features, a duration of the burst is a burst period.

In an implementation, the second communication device starts timing of the third timer and waiting for the third duration, in a case that a seventh condition is met.

The second end indication is a second end indication in the first packet header (such as a GTP-U packet header).

Optionally, the performing a third sub-operation of the second operation includes:
performing, by the second communication device, the third sub-operation of the second operation in a case that an eighth condition is met; where
the eighth condition includes at least one of the following:
   the third timer expires or the third duration for waiting expires; and
   a last data packet of the second burst or the tenth data packet set has been received before the third timer or the third duration expires.

In an implementation, the second communication device stops timing of the third timer and stops waiting for the third duration, in a case that an eighth condition is met.

In an implementation, the last received data packet in the second burst is a data packet that triggers "the last timing of the third timer or waiting for the third duration in the second burst".

It is not difficult to understand that the third timer or waiting for the third duration is started or restarted in a case that the second communication device has received the M-th data packet in the second burst. If the (M+1)-th data packet has not been received until the third timer expires or a wait for the third duration expires, it may be considered that the second burst ends. That is, it may be determined that the M-th packet is an end data packet of the second burst.

Optionally, the last data packet of the second burst is one of the following: an end data packet of the M-th data packet set in the burst; and a data packet, carrying a second end indication, in the M-th data packet set in the burst, where M is an integer greater than or equal to 1.

In an implementation, the second communication device learns that data of M data packet sets is transmitted in the second burst, and the M-th data packet set is a last data packet set of the second burst. The end data packet of the M-th data packet set is an end data packet of the burst.

In an implementation, the end data packet of the M-th data packet set may be a data packet carrying a data packet set end indication in the M-th data packet set.

In another implementation, the end data packet of the M-th data packet set may be an end data packet of the data packet set determined by performing the fifth sub-operation.

Optionally, the seventh condition or the eighth condition further includes at least one of the following:
the number of data packet sets of each burst is the same, only one data packet set is transmitted in each burst, or M data packet sets are transmitted in each burst; and
the tenth data packet set further meets: being the M-th data packet set or the last data packet set in the burst.

Optionally, the performing a fourth sub-operation of the second operation includes:
performing, by the second communication device, the fourth sub-operation of the second operation in a case that a ninth condition is met; where
the ninth condition includes at least one of the following:
   the second data packet set starts;
   the 1st data packet in the second data packet set has been received;
   a data packet has been received before the fourth timer or the fourth duration expires;
   a data packet has been received before the fourth timer or the fourth duration expires, and the data packet meets at least one of the following: being not a last data packet of the second data packet set, and being a data packet carrying no second end indication;
   a duration of the second data packet set ends before the fourth timer or the fourth duration expires; and
   a next data packet set starts before the fourth timer or the fourth duration expires.

Optionally, when transmission of data packet sets (for example, only one data packet set is transmitted in one burst, and the burst period may also be considered as a transmission period of the data packet set) has periodic features, a duration of the data packet set is a transmission period of the data packet set.

In an implementation, the second data packet set is a specific data packet set in the data flow. Start of the second data packet set represents start of data transmission of the second data packet set. The second communication device may determine start of a specific data packet set based on at least one of the following: the 1st data packet of the data packet set has been received, and a start time of the data packet set has been inferred based on a period of the data packet set. For example, if the data packet set is the M-th data packet set in the data flow, and the period of the data packet set is Y, the start time of the data packet set may be inferred based on M×Y.

Optionally, when the data packet set has periodic features, the duration of the data packet set is a data packet set period.

In an implementation, the second communication device starts timing of the fourth timer or waiting for the fourth duration in a case that a ninth condition is met.

The second end indication is a second end indication in the first packet header (such as a GTP-U packet header).

Optionally, the performing a fifth sub-operation of the second operation includes:
performing, by the second communication device, the fifth sub-operation of the second operation in a case that a tenth condition is met; where
the tenth condition includes at least one of the following:
   the fourth timer expires or the fourth duration for waiting expires; and
   a last data packet of the second data packet set has been received before the fourth timer or the fourth duration expires.

In an implementation, the second communication device stops timing of the fourth timer and stops waiting for the fourth duration, in a case that a tenth condition is met.

In an implementation, the last received data packet in the second data packet set is a data packet that triggers "the last timing of the fourth timer or waiting for the fourth duration in the second data packet set".

It is not difficult to understand that the fourth timer or waiting for the fourth duration is started or restarted in a case that the second communication device has received the M-th data packet in the second data packet set. If the (M+1)-th data packet has not been received until the fourth timer expires or a wait for the fourth duration expires, it may be considered that the second data packet set ends. That is, it may be determined that the M-th packet is the end data packet of the second data packet set.

The last data packet of the second data packet set is one of the following: an end data packet of the data packet set; and a data packet, carrying a second end indication, in the data packet set.

Optionally, the performing a second operation further includes: determining a terminal energy-saving operation based on a burst end indication in an uplink direction and a burst end indication in a downlink direction.

Optionally, the performing a second operation includes:
obtaining, by the first communication device, fourth information and performing the first sub-operation, the second sub-operation, the third sub-operation, the fourth sub-operation, and/or the fifth sub-operation of the second operation based on the fourth information.

The fourth information includes at least one of the following:
a second requirement, where the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
second feature information;
the third duration or the timing duration of the third timer;
the fourth duration or the timing duration of the fourth timer;
an average duration of time intervals between data packets;
a maximum duration of time intervals between data packets; and
a first jitter range.

The second feature information includes at least one of the following:
a period of a burst;
information for indicating at least one: the number of data packet sets of each burst is the same, the number of data packet sets of bursts is different, only one data packet set is transmitted in each burst, or M data packet sets are transmitted in each burst; and
information indicating at least one of the following: all data in one burst are mapped onto one data packet set, all data units in one burst are mapped onto one data packet set, and one data unit is mapped onto one data packet set.

In an implementation, the second communication device receives fourth information from a source end, and the source end includes a third communication device.

The tenth object includes at least one of the following: a first service data flow, a first QoS subflow, a first QoS flow, and a first QoS flow group; and the first QoS flow group includes a first QoS flow.

Optionally, the service data flow is a service data flow to which the first data unit belongs.

Optionally, the first QoS flow is a QoS flow mapped by the first service data flow.

Optionally, the burst is a burst in the tenth object.

Optionally, the data packet set is a data packet set in the tenth object.

Optionally, the second requirement is a corresponding second requirement of the tenth object.

Optionally, the second feature information is second feature information of the tenth object. The second feature information may also be referred to as second service feature information.

Optionally,
a maximum duration of time intervals between the data packets includes at least one of the following: a maximum duration of time intervals between the data packets in a burst, and a maximum duration of time intervals between the data packets in a data packet set; and/or
an average duration of time intervals between the data packets includes at least one of the following: an average duration of time intervals between the data packets in a burst, and an average duration of time intervals between the data packets in a data packet set; and/or
a jitter range of time intervals between the data packets includes at least one of the following: a jitter range of time intervals between the data packets in a burst, and a jitter range of time intervals between the data packets in a data packet set.

Optionally, the performing a third behavior based on the first information includes at least one of the following:
performing at least one of the following based on an average duration of time intervals between data packets in a burst and/or a jitter range of time intervals between data packets in the burst: determining the first duration or the timing duration of the first timer; determining a maximum duration of the transmission time intervals of the data packets in the burst; determining a maximum duration of transmission time intervals of data packets in a data packet set; and
performing at least one of the following based on an average duration of time intervals between the data packets in the data packet set and/or a jitter range of the time intervals between the data packets in the data packet set: determining the second duration or the timing duration of the second timer; and determining the maximum duration of the transmission time intervals of the data packets in the data packet set.

Optionally, the performing a fourth behavior based on the second information includes at least one of the following:
determining the first duration or the timing duration of the first timer based on a maximum duration of transmission time intervals of data packets in a burst or a maximum duration of transmission time intervals of data packets in a data packet set; and
determining the second duration or the timing duration of the second timer based on the maximum duration of the transmission time intervals of the data packets in the data packet set.

It is not difficult to understand that according to this embodiment, end of data transmission may be determined, so as to achieve the purpose of energy saving for the terminal.

Refer to FIG. 5. An embodiment of the present invention provides a method for determining end of data transmission, which is applied to a third communication device. The third communication device includes but is not limited to a CN network element, including but not limited to an SMF, a PCF, or the like. As shown in FIG. 5, the method includes the following steps.

Step 51: The third communication device performs a third operation.

In this embodiment, the third operation includes at least one of the following:
obtaining fifth information;
determining sixth information based on the fifth information, where the sixth information includes at least one of the following: protocol description information or a packet filter of a second object; a first requirement; first feature information; a second requirement; second feature information; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet;
determining and/or transmitting third information and/or fourth information based on at least one of the fifth information and a local configuration; and
binding a policy control and charging (Policy Control and Charging, PCC) rule to an independent QoS flow in a case that the PCC rule contains the fifth information or the information related to the data burst operation.

The third information includes at least one of the following: a first requirement; first feature information; protocol description information or a packet filter of a second object; a first duration or a timing duration of a first timer; a second duration or a timing duration of a second timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation or information for indicating a burst information-based operation, information for indicating to monitor the end data packet of the burst, information for indicating to add a second end indication to the end data packet of the burst, and burst information corresponding to a burst to which a data packet belongs and used for indicating to mark the data packet.

The fourth information includes at least one of the following: a second requirement, second feature information, a third duration or a timing duration of a third timer, a fourth duration or a timing duration of a fourth timer, an average duration of time intervals between data packets, a maximum duration of time intervals between data packets, and a first jitter range.

The fifth information includes at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet.

The first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst.

The second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst.

The first feature information includes at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

The second feature information includes at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, where M is an integer greater than or equal to 1.

The packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet.

The protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet.

The first jitter range is a jitter range of time intervals between the data packets.

The first object or the second object includes at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object.

The tenth object includes at least one of the following: a first service data flow, a first QoS subflow, a first QoS flow, or a first QoS flow group; and the first QoS flow group includes a first QoS flow.

In an implementation, the independent QoS flow means that the QoS flow is used only for the PCC rule, not being shared with other PCC rules.

In an implementation, the determining and/or sending third information based on the fifth information includes:
based on the fifth information, determining and/or sending information for indicating to add a second end indication to the end data packet of the burst, and burst information corresponding to a burst to which a data packet belongs and used for indicating to mark the data packet; where the fifth information includes at least one of the following:
information for indicating that a first protocol or a first protocol header supports providing at least one of the following: a first end indication, information used for identifying the end data packet of the burst, and information used for marking a second end indication for the data packet;
information for indicating activation of a terminal energy-saving operation;
information for indicating a data burst-based operation;
information for indicating to add a second end indication to the end data packet of the burst; and
burst information corresponding to a burst to which a data packet belongs and used for indicating to mark the data packet; where

In an implementation, the third communication device receives fifth information from a source end, and the source end includes a fourth communication device. In another implementation, the fifth information is fifth information configured locally by the third communication device.

In an implementation, the third communication device sends third information to a target end, and the target end includes a first communication device.

In an implementation, the third communication device sends fourth information to the target end, and the target end includes a second communication device.

In an implementation, the third information and/or the fourth information is included and sent in a message or information element corresponding to the first QoS flow.

The first object may be different from the second object, for example, the first object is a first service data flow, and the second object may be at least one of the following: a first service data flow, a first QoS subflow, a first QoS flow, or a first QoS flow group.

The tenth object includes at least one of the following: a first service data flow, a first QoS subflow, a first QoS flow, and a first QoS flow group; and the first QoS flow group includes a first QoS flow.

Optionally, the fifth information is fifth information corresponding to the first service data flow.

Optionally, the third information or the fourth information is fifth information corresponding to the tenth object.

Optionally, the service data flow is a service data flow to which the first data unit belongs.

Optionally, the first QoS flow is a QoS flow mapped by the first service data flow.

Optionally, the burst is a burst in the tenth object.

Optionally, the data packet set is a data packet set in the tenth object.

Optionally, the first requirement is a corresponding first requirement of the tenth object.

Optionally, the second requirement is a corresponding second requirement of the tenth object.

Optionally, the first feature information is first feature information of the tenth object.

Optionally, the second feature information is second feature information of the tenth object.

Optionally, the determining sixth information based on the fifth information includes at least one of the following:
based on fifth information of a first-object granularity, determining sixth information of a second-object granularity;
determining the fourth information based on sub-information in the fifth information;
determining the second feature information and/or the second requirement based on the first feature information and/or the first requirement;
determining the first duration and/or the third duration based on the first jitter range and the average duration of the time intervals between the data packets in the burst;
determining the second duration and/or the fourth duration based on the first jitter range and the average duration of the time intervals between the data packets in the data packet set; and
based on the fifth information of the first-object granularity, setting or determining the sixth information of the second-object granularity; for example, the packet filter of the second object is set or determined based on the packet filter of the first object.

The second object is an object mapped by the first object. For example, the first object is a first service data flow, and the second object is one of the following: a first QoS subflow, a first QoS flow, or a first QoS flow group. The first QoS flow group includes a first QoS flow. When the first duration and/or the third duration is determined based on the first jitter range and the average duration of the time intervals between the data packets in the burst, the first jitter range is a jitter range of time intervals between data packets in the burst.

When the second duration and/or the fourth duration is determined based on the first jitter range and the average duration of the time intervals between the data packets in the data packet set, the first jitter range is a jitter range of time intervals between data packets in the data packet set.

The sub-information in the fifth information is optionally the third information.

The sub-information in the fifth information includes at least one of the following: a first requirement; first feature information; a packet filter of a second object; a first duration or a timing duration of a first timer; a second duration or a timing duration of a second timer; an average duration of time intervals between data packets; a maximum duration of time intervals between data packets; and a first jitter range.

It is not difficult to understand that according to this embodiment, the first communication device/second communication device may be assisted to determine end of data transmission, so as to achieve the purpose of energy saving for the terminal.

Refer to FIG. 6. An embodiment of the present invention provides a method for determining end of data transmission, which is applied to a fourth communication device. The fourth communication device includes but is not limited to a CN network element, and the CN network element includes but is not limited to a PCF or the like. As shown in FIG. 6, the method includes the following steps.

Step 61: The fourth communication device obtains seventh information.

The seventh information includes at least one of the following: a first jitter range; an average duration of time intervals between data packets; a maximum duration of time intervals between data packets; feature information of a service data flow; protocol description information or a packet filter of a second object; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet.

The feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

In an implementation, the seventh information is seventh information configured locally by the fourth communication device, or the seventh information is received from the fifth communication device or the sixth communication device.

Step 62: The fourth communication device performs a fourth operation based on the seventh information.

In this embodiment, the performing a fourth operation includes at least one of the following:
determining fifth information; and
sending the fifth information; where
the fifth information includes at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet.

The first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst.

The second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst.

The first feature information includes at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

The second feature information includes at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, where M is an integer greater than or equal to 1.

The packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet.

The protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet.

The first jitter range is a jitter range of time intervals between the data packets.

The first object includes at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and

The tenth object includes at least one of the following: a first service data flow, a first QoS subflow, a first QoS flow, or a first QoS flow group; and the first QoS flow group includes a first QoS flow.

The first jitter range is a jitter range of time intervals between the data packets in the burst.

In an implementation, the determining fifth information based on the seventh information includes:
based on the seventh information, determining and/or sending information for indicating to add a second end indication to the end data packet of the burst, and burst information corresponding to a burst to which a data packet belongs and used for indicating to mark the data packet; where the seventh information includes at least one of the following:
information for indicating that a first protocol or a first protocol header supports providing at least one of the following: a first end indication, information used for identifying the end data packet of the burst, and information used for marking a second end indication for the data packet;
information for indicating activation of a terminal energy-saving operation;
information for indicating a data burst-based operation;
information for indicating to add a second end indication to the end data packet of the burst; and
burst information corresponding to a burst to which a data packet belongs and used for indicating to mark the data packet.

In an implementation, the data unit includes a NAL Unit.

In an implementation, the first feature information or the second feature information is feature information corresponding to the first QoS flow.

In an implementation, the fourth communication device sends the fifth information to a target end, and the target end includes a third communication device (such as an SMF/PCF).

Optionally, the first duration is used for one of the following: determining end of a burst, determining end of a data unit, and determining end of a data packet set; or the first duration is used to indicate a maximum duration of timing of the first timer; and first timer is a timer used for one of the following: determining end of burst data transmission, determining end of data unit transmission, and determining end of data packet set transmission.

The second duration is used for one of the following: determining end of a data unit, and determining end of a data packet set; or the second duration is used to indicate a maximum duration of timing of the second timer; and the second timer is a timer for determining end of data unit transmission or end of data packet set transmission.

The third duration is used for determining end of a burst; or the third duration is used to indicate a maximum duration of timing of the third timer. The third timer is a timer for determining end of burst data transmission.

The fourth duration is used for determining end of a data packet set; or the fourth duration is used to indicate a maximum duration of timing of the fourth timer. The fourth timer is a timer for determining end of data packet set data transmission.

Optionally, the performing a fourth operation based on the seventh information includes at least one of the following:
determining at least one of the following based on the feature information of the service data flow: the first requirement, the second requirement, the first feature information, and the second feature information; and
determining at least one of the following based on the first jitter range and the average duration of the time intervals between the data packets in the burst: the first duration and the third duration; and determining at least one of the following based on the first jitter range and the average duration of the time intervals between the data packets in the data packet set: the second duration and the fourth duration.

In a case that "at least one of the following is determined based on the first jitter range and the average duration of the time intervals between the data packets in the burst: the first duration and the third duration", the first jitter range is a jitter range of time intervals between data packets in the burst.

In a case that "at least one of the following is determined based on the first jitter range and the average duration of the time intervals between the data packets in the data packet set: the second duration and the fourth duration", the first jitter range is a jitter range of time intervals between data packets in the data packet set.

It is not difficult to understand that according to this embodiment, the first communication device/second communication device may be assisted to determine end of data transmission, so as to achieve the purpose of energy saving for the terminal.

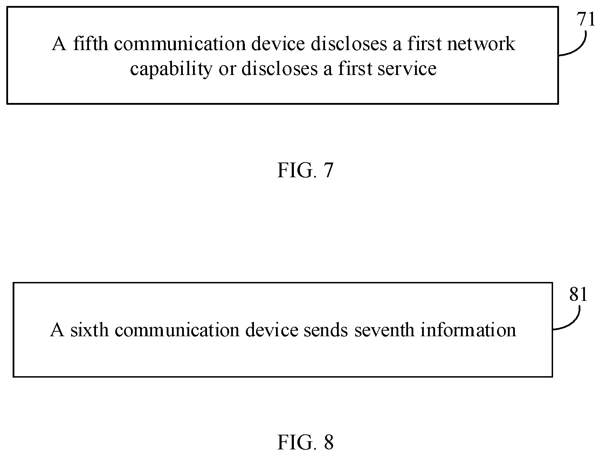

Refer to FIG. 7. An embodiment of the present invention provides a method for determining end of a data burst, which is applied to a fifth communication device. The fifth communication device includes but is not limited to a CN network element, and the CN network element includes but is not limited to a NEF or the like. As shown in FIG. 7, the method includes the following steps.

Step 71: The fifth communication device discloses a first network capability or discloses a first service.

The first network capability is used for calling and/or providing seventh information by a sixth communication device, and the first service is allowed for inputting seventh information.

The seventh information includes at least one of the following: a first jitter range; an average duration of time intervals between data packets; a maximum duration of time intervals between data packets; feature information of a service data flow; protocol description information or a packet filter of a second object; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet.

The feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

The first jitter range is a jitter range of time intervals between the data packets.

In an implementation, the first service is such as Nnef_AFsessionWithQoS.

It is not difficult to understand that according to this embodiment, the first communication device/second communication device may be assisted to determine end of data transmission, so as to achieve the purpose of energy saving for the terminal.

Refer to FIG. 8. An embodiment of the present invention provides a method for determining end of a data burst, which is applied to a sixth communication device. The sixth communication device includes but is not limited to a CN network element, and the CN network element includes but is not limited to a NEF, an AF, an NWDAF, or the like. As shown in FIG. 8, the method includes the following steps.

Step 81: The sixth communication device sends seventh information.

The seventh information includes at least one of the following: a first jitter range; an average duration of time intervals between data packets; a maximum duration of time intervals between data packets; feature information of a service data flow; protocol description information or a packet filter of a second object; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet.

The feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

The first jitter range is a jitter range of time intervals between the data packets.

In an implementation, the sent feature information of the service data flow is obtained feature information of the service data flow.

It is not difficult to understand that according to this embodiment, the first communication device/second communication device may be assisted to determine end of data transmission, so as to achieve the purpose of energy saving for the terminal.

This application is described below with reference to specific embodiments.

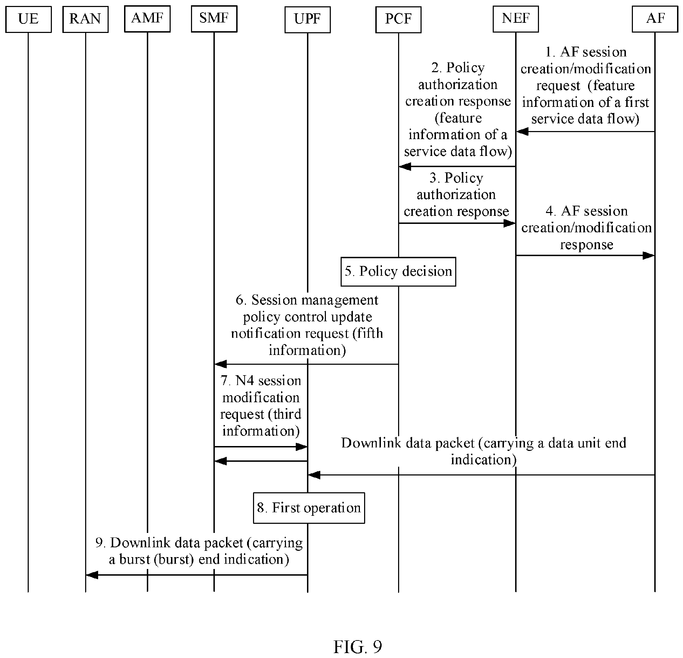

Embodiment 1 mainly aims at scenarios shown in FIG. 2A and FIG. 2B, in which a UPF identifies end of a burst. Referring to FIG. 9, the following steps are mainly included.

Step 1: An AF sends an AF session creation/modification request to a NEF, where the request includes feature information of a first service data flow, and the feature information is described in the embodiment of FIG. 7 or FIG. 8, which is not repeated here.

For example, in the scenario of FIG. 2A, the feature information indicates that only one data unit is transmitted in each burst in the first service data flow.

For example, in the scenario of FIG. 2B, the feature information indicates that N data units are transmitted in each burst in the first service data flow. N=2.

Step 2: The NEF sends a policy authorization creation request to a PCF, where the request includes the feature information of the first service data flow.

Step 3: The PCF returns a policy authorization creation response to the NEF.

Step 4: The NEF returns an AF session creation/modification response to the AF.

Step 5: The PCF executes policy decision, as described in the embodiment of FIG. 6, for example, determining a first requirement and first feature information, determining a first duration or a timing duration of a first timer, and setting information of a first protocol header included in a packet filter of a first object (such as a first service data flow), which may be described in the embodiment of FIG. 3 and are not repeated here.

In the scenario of FIG. 2A, for example, the first requirement is used for requesting one of the following: using an end data packet of the 1st data unit in a burst as an end data packet of the burst, using end of the 1st data unit in the burst as end of the burst, using the 1st data packet carrying a first end indication as the end data packet of the burst, and using an arrival time of the 1st data packet carrying the first end indication as end of the burst.

In the scenario of FIG. 2A, for example, the first feature information includes at least one of the following: a period of the burst; and information for indicating at least one: the number of data units transmitted in each burst is the same, only one data unit is transmitted in each burst, or N data units are transmitted in each burst.

In the scenario of FIG. 2B, for example, the first requirement is used for requesting one of the following: using an end data packet of the 2nd data unit in a burst as an end data packet of the burst, using end of the 2nd data unit in the burst as end of the burst, using the 2nd data packet carrying a first end indication as the end data packet of the burst, and using an arrival time of the 2nd data packet carrying the first end indication as end of the burst.

In the scenario of FIG. 2B, for example, the first feature information includes at least one of the following: a period of the burst; and information for indicating at least one: the number of data units transmitted in each burst is the same, or two data units are transmitted in each burst.

Step 6: The PCF sends a session management policy control update notification request to the SMF, where the request includes fifth information, and the fifth information is described above, such as the first requirement of the service data flow and the packet filter (packet filter) of the first object of the service data flow. Details about determining the sixth information based on the fifth information are described in the embodiment of FIG. 5.

Step 7: The SMF sends an N4 session modification request to the UPF, carrying third information, where the third information is described above, for example, including the first requirement of the service data flow, the first feature information, and the packet filter of the second object.

Step 8: The UPF performs a first operation after receiving a downlink data packet.

In the scenario that only one data unit is transmitted in each burst, if the downlink data packet carries a data unit end indicator, it is determined that the burst ends and the data packet is an end data packet of the first burst.

In the scenario that two data units are transmitted in each burst, if the downlink data packet carries the 2nd data unit end indicator, it is determined that the burst ends and the data packet is an end data packet of the first burst.

Step 9: The UPF sends to a RAN a downlink data packet, which carries a burst end indication.

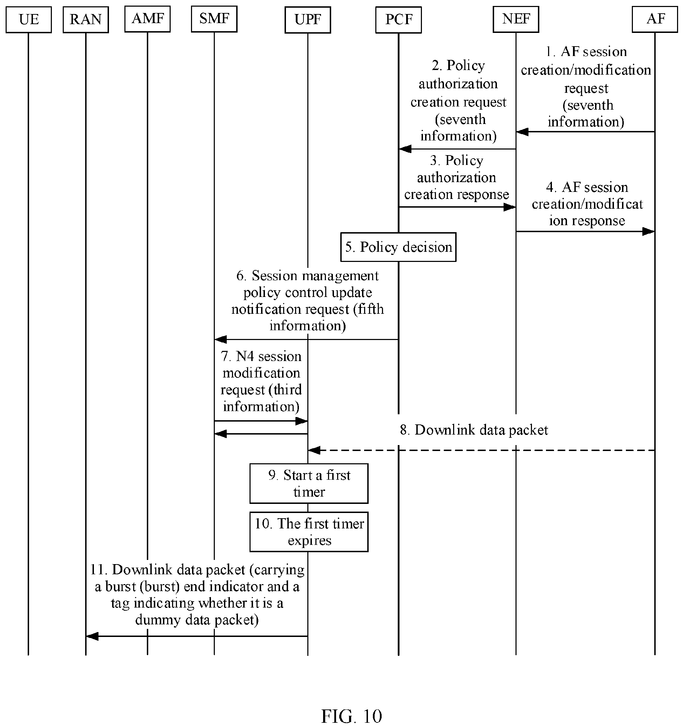

Embodiment 2 mainly describes a scenario shown in FIG. 2C, in which a UPF identifies end of a burst. Referring to FIG. 10, the following steps are mainly included.

Step 1: An AF sends an AF session creation/modification request to an NEF, where the request includes seventh information, and the seventh information includes at least one of the following: a first jitter range; an average duration of time intervals between data packets; a maximum duration of time intervals between data packets; and feature information of a service data flow, which are described in the embodiment of FIG. 7 or the embodiment of FIG. 8, and are not repeated here.

As shown in the scenario of FIG. 2C, for example, the feature information indicates that the number of data units transmitted in bursts in the first service data flow is different.

Step 2: The NEF sends a policy authorization creation request to a PCF, where the request includes the seventh information.

Step 3: The PCF returns a policy authorization creation response to the NEF.

Step 4: The NEF returns an AF session creation response to the AF.

Step 5: The PCF executes policy decision, as described in the embodiment of FIG. 6, for example, determining a first duration or a timing duration of a first timer, and setting information of a first protocol header included in a packet filter of a first object (such as a first service data flow), where a first requirement, the first duration, and the first object may be described in the embodiment of FIG. 3, and are not repeated here.

Step 6: The PCF sends a session management policy control update notification request to the SMF, where the request includes fifth information, and the fifth information is described above, such as the first requirement of the service data flow and the packet filter (packet filter) of the first object of the service data flow. Details about determining the sixth information based on the fifth information are described in the embodiment of FIG. 5.

Step 7: The SMF sends an N4 session modification request to the UPF, carrying third information, where the third information is described above, for example, including the first duration or the maximum duration of the first timer, the packet filter of the second object, and/or the first jitter range.

Step 8: The UPF receives a downlink data packet.

Step 9: After receiving the downlink data packet, the UPF starts or restarts timing of the first timer, or starts or restarts waiting for the first duration.

Step 10: In a case that the first timer expires or a wait for the first duration expires, the UPF execute a third sub-operation of the first operation, where the third sub-operation of the first operation includes at least one of the following: stopping timing of the first timer; stopping or waiting for the first duration; determining end of the first burst; determining end of a first data packet set; determining an end data packet of the first burst or the first data packet set; setting a second end indication in a first header of the end data packet; setting a second end indication for a last received data packet in the first burst; constructing a dummy data packet; setting a second end indication for a first packet header (such as GTP-U packet header) of the dummy data packet; and sending the dummy data packet.

Step 11: The UPF sends a downlink data packet to the RAN, which carries a burst end indication and a tag indicating whether it is a dummy data packet.

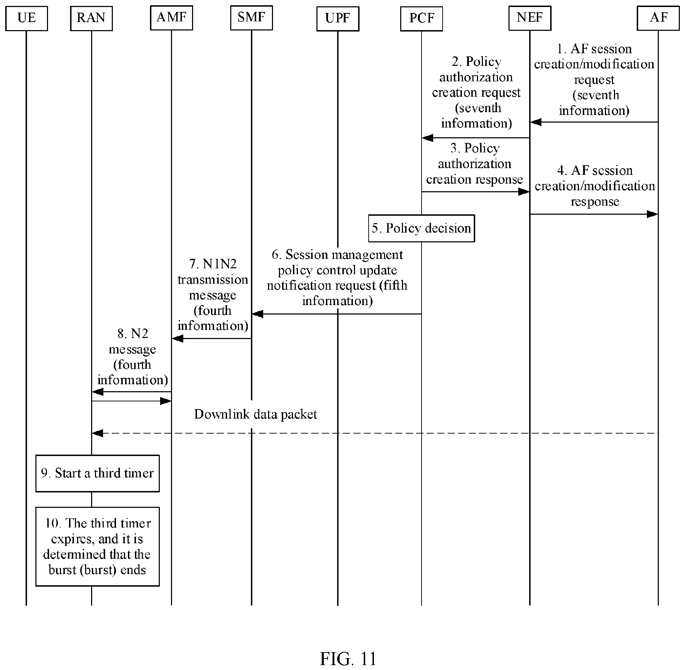

Embodiment 3 mainly describes a scenario shown in FIG. 2C, in which a RAN identifies end of a burst. Referring to FIG. 11, the following steps are mainly included.

Steps 1 to 6 are the same as steps 1 to 6 in Embodiment 2, and are not described here.

Step 7: The SMF sends an N1N2 transmission request to the AMF, carrying fourth information, where the fourth information is described above, for example, including a third duration or a timing duration of a third timer, a first requirement of a service data flow, a packet filter of a second object, and/or a first jitter range.

Step 8: The AMF sends an N2 message to the RAN, carrying fourth information, where the fourth information is described above, for example, including the third duration or the timing duration of the third timer, the first requirement of the service data flow, the packet filter of the second object, and/or the first jitter range.

Step 9: After receiving the downlink data packet, the RAN starts or restarts timing of the third timer, or starts or restarts waiting for the third duration.

Step 10: When the third timer expires or the third duration for waiting expires, it is determined that the burst ends.

The execution subject of the method for determining end of data transmission provided in the embodiments of this application may be an apparatus for determining end of data transmission. In the embodiments of this application, the apparatus for determining end of data transmission provided in the embodiments of this application is described by using the method for determining end of data transmission being executed by the apparatus for determining end of data transmission as an example.

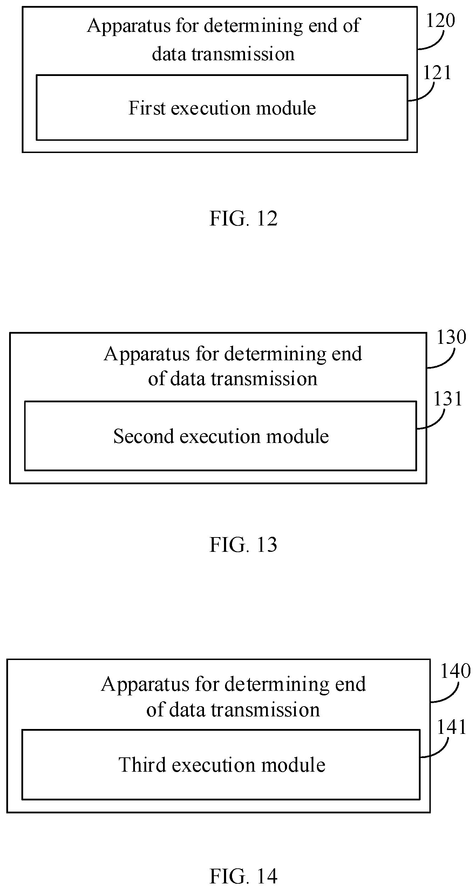

Refer to FIG. 12. FIG. 12 is a schematic structural diagram of an apparatus for determining end of data transmission according to an embodiment of this application; and the apparatus is applied to a first communication device. The first communication device includes but is not limited to a RAN network element, a CN network element, or a terminal UE, and the CN network element includes but is not limited to a UPF and the like. As shown in FIG. 12, the apparatus 120 for determining end of data transmission includes:
a first execution module 121, configured to perform a first operation, where the performing a first operation includes at least one of the following:
performing a first sub-operation of the first operation, where the first sub-operation of the first operation includes at least one of the following: determining end of a first burst (burst); determining that a first data packet is an end data packet of the first burst; enabling the first data packet to carry a second end indication; and sending the first data packet, the first data packet carrying a second end indication; where the second end indication includes one of the following: a burst end indication and a data packet set end indication;
performing a second sub-operation of the first operation, where the second sub-operation of the first operation includes at least one of the following: starting or restarting timing of a first timer; and starting or restarting a wait for a first duration;
performing a third sub-operation of the first operation, where the third sub-operation of the first operation includes at least one of the following: stopping timing of the first timer; stopping or waiting for the first duration; determining end of the first burst; determining end of a first data packet set; determining an end data packet of the first burst or the first data packet set; enabling the end data packet to carry a second end indication; sending the end data packet, the end data packet carrying a second end indication; enabling a last received data packet in the first burst to carry a second end indication; sending the last received data packet in the first burst, the data packet carrying a second end indication; constructing a dummy data packet; enabling the dummy data packet to carry a second end indication; and sending the dummy data packet, the dummy data packet carrying a second end indication;
performing a fourth sub-operation of the first operation, where the fourth sub-operation of the first operation includes at least one of the following: starting or restarting timing of a second timer; and starting or restarting a wait for a second duration;
performing a fifth sub-operation of the first operation, where the fifth sub-operation of the first operation includes at least one of the following: stopping timing of a second timer; stopping or waiting for a second duration; determining end of the first data packet set; determining end of a first data unit; determining an end data packet of the first data packet set or the first data unit; enabling an end data packet to carry a data packet set end indication; sending the end data packet, the end data packet carrying a data packet set end indication; enabling a last received data packet in the first data packet set or the first data unit to carry a data packet set end indication; sending the last received data packet in the first data packet set or the first data unit, the data packet carrying a data packet set end indication; constructing a dummy data packet; enabling the dummy data packet to carry a data packet set end indication; and sending the dummy data packet, the dummy data packet carrying a data packet set end indication;
obtaining the first duration or a timing duration of the first timer;
obtaining the second duration or a timing duration of the second timer;
obtaining first information, where the first information includes at least one of the following: an average duration of time intervals between data packets and a first jitter range;
performing a first behavior based on the first information, where the first behavior includes at least one of the following: determining the first duration or the timing duration of the first timer; determining the second duration or the timing duration of the second timer; and determining a maximum duration of transmission time intervals of data packets;
obtaining second information, where the second information includes a maximum duration of time intervals between data packets; and
performing a second behavior based on the second information, where the second behavior includes at least one of the following: determining the first duration or the timing duration of the first timer; and determining the second duration or the timing duration of the second timer; where
the first data packet meets at least one of the following:
   the first data packet is a data packet in the first data unit or a data packet of the first burst; and
   the first data packet is an end data packet of a first data unit; and
   the first data packet carries a first end indication; where
   the first data unit meets at least one of the following: a data unit in the first burst, and a data unit mapped to the first data packet set; and
   the first jitter range is a jitter range of time intervals between the data packets.

Optionally, the determining an end data packet of the first burst or the first data packet set includes at least one of the following:
if the first communication device still has a received data packet of the first burst, using, by the first communication device, a last received data packet in the first burst as the end data packet of the first burst or the first data packet set; and
if the first communication device already has no data packet of the first burst, creating, by the first communication device, one dummy data packet and using the dummy data packet as the end data packet of the first burst or the first data packet set; and/or
the first duration is used for one of the following: determining end of a burst, determining end of a data unit, and determining end of a data packet set; or the first duration is used to indicate a maximum duration of timing of the first timer; and/or
the first timer is a timer used for one of the following: determining end of burst data transmission, determining end of data unit transmission, and determining end of data packet set transmission; and/or
the second duration is used for one of the following: determining end of a data unit and determining end of a data packet set; or the second duration is used to indicate a maximum duration of timing of the second timer; and/or
the second timer is a timer for determining end of data unit transmission or end of data packet set transmission.

Optionally, the first jitter range includes at least one of the following:
a maximum value in jitter positive values of time intervals between data packets; and
a minimum value in jitter negative values of time intervals between data packets.

Optionally, the first end indication is one of the following:
an end indication in a first protocol header;
an end indication of a data unit; and
an end indication of a burst.

The first protocol header includes one of the following: an IP protocol header of a data packet of the terminal or a protocol header within the IP protocol header, a real-time transport protocol RTP protocol header, an RTP protocol header extension, a secure real-time transport protocol SRTP protocol header, an SRTP protocol header extension, or header information of a protocol indicated by the protocol description information; and/or the first protocol header does not include a GPRS tunneling protocol for the user plane GTP-U header.

Optionally, the first execution module 121 is configured to perform the first sub-operation of the first operation in a case that a first condition is met; where
the first condition includes at least one of the following:
a first requirement has been obtained, where the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
the number of data units transmitted in each burst is the same, only one data unit is transmitted in each burst, or N data units are transmitted in each burst; and
the first data unit further meets: being the N-th data unit or a last data unit in the first burst;
a service data flow supports a first protocol header, or a data packet of the service data flow has a first protocol header;
a packet filter of a quality of service QoS flow includes information describing at least one of the following: a first protocol, a first protocol header, and an end indication in the first protocol header;
the first communication device supports reading the first protocol header;
protocol description information or a packet filter of a second object has been obtained;
a first protocol or the first protocol header supports providing at least one of the following: a first end indication, information used for identifying the end data packet of the burst, and information used for marking a second end indication for the data packet;
information for indicating activation of a terminal energy-saving operation has been obtained;
information for indicating a burst-based operation or information for indicating a burst information-based operation has been obtained;
information for indicating to monitor the end data packet of the burst has been obtained;
information for indicating to add a second end indication to the end data packet of the burst has been obtained; and
burst information, corresponding to a burst to which a data packet belongs and used for indicating to mark the data packet, has been obtained; where
N is an integer greater than or equal to 1.

Optionally, the first data unit being a data unit in the first burst includes one of the following:
the first media unit is the first arrived data unit in the first burst;
the first media unit is the N-th arrived data unit in the first burst; and
the first media unit is a last arrived data unit in the first burst.

Optionally, the first execution module 121 is configured to perform the second sub-operation of the first operation in a case that a second condition is met; where
the second condition includes at least one of the following:
the first burst starts;
the 1st data packet in the first burst has been received;
a data packet has been received before the first timer or the first duration expires;
a data packet has been received before the first timer or the first duration expires, and the data packet meets at least one of the following: being not a last data packet of the first data packet set or the first burst, being a data packet carrying no first end indication, and being a data packet in the N-th data unit;
a duration of the first burst ends before the first timer or the first duration expires; and
a next burst starts before the first timer or the first duration expires.

Optionally, the first execution module 121 is configured to perform the third sub-operation of the first operation in a case that a third condition is met; where
the third condition includes at least one of the following:
the first timer expires or the first duration for waiting expires; and
a last data packet of the first data packet set or the first burst has been received before the first timer or the first duration expires.

Optionally, the last data packet of the first data packet set or the first burst is one of the following: an end data packet of the N-th data unit in the burst; and a data packet carrying a first end indication in the N-th data unit in the burst, where N is an integer greater than or equal to 1.

Optionally, the second condition or the third condition further includes at least one of the following:
the number of data units transmitted in each burst is the same, only one data unit is transmitted in each burst, or N data units are transmitted in each burst; and
the first data unit further meets: being the N-th data unit or a last data unit in the burst.

Optionally, in a case that the third sub-operation includes at least one of constructing a dummy data packet, enabling the dummy data packet to carry a data packet set end indication, and sending the dummy data packet, the dummy data packet carrying a data packet set end indication, the third condition further includes:
the first communication device already has no data packet in the first burst.

Optionally, the first execution module 121 is configured to perform the fourth sub-operation of the first operation in a case that a fourth condition is met; where
the fourth condition includes at least one of the following:
the first data packet set starts;
the 1st data packet of the first data packet set or the first data unit has been received;
a data packet has been received before the second timer or the second duration expires;
a data packet of the first data packet set or the first data unit has been received before the second timer or the second duration expires, and the data packet meets at least one of the following: being not a last data packet of the first data unit and not carrying a first end indication;
a duration of the first data packet set ends before the second timer or the second duration expires; and
a next data packet set starts before the second timer or the second duration expires.

Optionally, the first execution module 121 is configured to perform the fifth sub-operation of the first operation in a case that a fifth condition is met; where
the fifth condition includes at least one of the following:
the second timer expires or the second duration for waiting expires; and
a last data packet of the first data packet set or the first data unit has been received before the second timer or the second duration expires.

Optionally, the first execution module 121 is configured to obtain third information and performing the first sub-operation, the second sub-operation, the third sub-operation, the fourth sub-operation, and/or the fifth sub-operation of the first operation based on the third information; where
the third information includes at least one of the following:
a first requirement, where the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
first feature information;
protocol description information or a packet filter of a second object;
the first duration or the timing duration of the first timer;
the second duration or the timing duration of the second timer;
an average duration of time intervals between data packets;
a maximum duration of time intervals between data packets; and
a first jitter range;
information for indicating that a first protocol or a first protocol header supports providing at least one of the following: a first end indication, information used for identifying the end data packet of the burst, and information used for marking a second end indication for the data packet;
information for indicating activation of a terminal energy-saving operation;
information for indicating a burst-based operation or information for indicating a burst information-based operation;
information for indicating to monitor the end data packet of the burst;
information for indicating to add a second end indication to the end data packet of the burst; and
burst information corresponding to a burst to which a data packet belongs and used for indicating to mark the data packet; where
the first feature information includes at least one of the following:
   a period of a burst;
   information for indicating at least one: the number of data units transmitted in each burst is the same, the number of data units transmitted in each burst is different, only one data unit is transmitted in each burst, or N data units are transmitted in each burst; and
   information indicating at least one of the following: all data in one burst are mapped onto one data packet set, all data units in one burst are mapped onto one data packet set, and one data unit is mapped onto one data packet set; where
   N is an integer greater than or equal to 1.

The second object includes at least one of the following: a first service data flow, a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object.

The tenth object includes at least one of the following: a first service data flow, a first QoS subflow, a first QoS flow, and a first QoS flow group.

The packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet.

The protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet.

Optionally, a maximum duration of time intervals between the data packets includes at least one of the following: a maximum duration of time intervals between the data packets in a burst, and a maximum duration of time intervals between the data packets in a data packet set; and/or
an average duration of time intervals between the data packets includes at least one of the following: an average duration of time intervals between the data packets in a burst, and an average duration of time intervals between the data packets in a data packet set; and/or
a jitter range of time intervals between the data packets includes at least one of the following: a jitter range of time intervals between the data packets in a burst, and a jitter range of time intervals between the data packets in a data packet set.

Optionally, the first execution module 121 is configured to perform at least one of the following:
performing at least one of the following based on an average duration of time intervals between data packets in a burst and/or a jitter range of time intervals between data packets in the burst: determining the first duration or the timing duration of the first timer; determining a maximum duration of the transmission time intervals of the data packets in the burst; determining a maximum duration of transmission time intervals of data packets in a data packet set; and
performing at least one of the following based on an average duration of time intervals between the data packets in the data packet set and/or a jitter range of the time intervals between the data packets in the data packet set: determining the second duration or the timing duration of the second timer; and determining the maximum duration of the transmission time intervals of the data packets in the data packet set.

Optionally, the first execution module 121 is configured to perform at least one of the following:
determining, by the first communication device, the first duration or the timing duration of the first timer based on a maximum duration of transmission time intervals of data packets in a burst or a maximum duration of transmission time intervals of data packets in a data packet set; and
determining, by the first communication device, the second duration or the timing duration of the second timer based on the maximum duration of the transmission time intervals of the data packets in the data packet set.

The apparatus 120 for determining end of data transmission provided in this embodiment of this application is capable of implementing the processes implemented in the method embodiments in FIG. 3, with the same technical effects achieved. To avoid repetition, details are not described herein again.

Refer to FIG. 13. FIG. 13 is a schematic structural diagram of an apparatus for determining end of data transmission according to an embodiment of this application; and the apparatus is applied to a second communication device. The second communication device includes but is not limited to a RAN network element and a terminal. As shown in FIG. 13, the apparatus 130 for determining end of data transmission includes:
a second execution module 131, configured to perform a second operation, where the performing a second operation includes at least one of the following:
performing a first sub-operation of the second operation, where the first sub-operation of the second operation includes at least one of the following: determining end of a second burst, and determining that a second data packet is an end data packet of the second burst; enabling the second data packet to carry a burst end indication; and sending the second data packet, the second data packet carrying a burst end indication;
performing a second sub-operation of the second operation, where the second sub-operation of the second operation includes at least one of the following: starting or restarting timing of a third timer; and starting or restarting a wait for a third duration;
performing a third sub-operation of the second operation, where the third sub-operation of the second operation includes at least one of the following: stopping timing of the third timer; stop waiting for the third duration; determining end of the second burst; determining an end data packet of the second burst; enabling the end data packet to carry a burst end indication; sending the end data packet of the second burst, the end data packet carrying a burst end indication; enabling a last received data packet in the second burst to carry a burst end indication; sending the last received data packet in the second burst, the data packet carrying a burst end indication; constructing a dummy data packet; enabling the dummy data packet to carry a burst end indication; and sending the dummy data packet, the dummy data packet carrying a burst end indication;
performing a fourth sub-operation of the second operation, where the fourth sub-operation of the second operation includes at least one of the following: starting or restarting timing of a fourth timer; and starting or restarting a wait for the fourth duration;
performing a fifth sub-operation of the second operation, where the fifth sub-operation of the second operation includes at least one of the following: stopping timing of a fourth timer; stopping or waiting for a fourth duration; determining end of a second data packet set; determining an end data packet of the second data packet set; enabling the end data packet to carry a data packet set end indication; sending the end data packet, the end data packet carrying a data packet set end indication; enabling a last received data packet in the second data packet set to carry a data packet set end indication; sending the last received data packet in the second data packet set, the data packet carrying a data packet set end indication; constructing a dummy data packet; enabling the dummy data packet to carry a data packet set end indication; and sending the dummy data packet, the dummy data packet carrying a data packet set end indication;
obtaining the third duration or a timing duration of the third timer;
obtaining the fourth duration or a timing duration of the fourth timer;
obtaining first information, where the first information includes at least one of the following: an average duration of time intervals between data packets and a first jitter range;
performing a third behavior based on the first information, where the third behavior includes at least one of the following: determining the third duration or the timing duration of the third timer; determining the fourth duration or the timing duration of the fourth timer; and determining a maximum duration of transmission time intervals of data packets;
obtaining second information, where the second information includes a maximum duration of time intervals between data packets; and
performing a fourth behavior based on the second information, where the fourth behavior includes at least one of the following: determining the third duration or the timing duration of the third timer; and determining the fourth duration or the timing duration of the fourth timer; where
the second data packet meets at least one of the following:
the second data packet is a data packet in a tenth data packet set or a data packet of the second burst;
the second data packet is an end data packet of the tenth data packet set; and
the second data packet carries a second end indication; where
the tenth data packet set is a data packet set in the second burst;
the second end indication includes one of the following: a burst end indication and a data packet set end indication; and
the first jitter range is a jitter range of time intervals between the data packets.

Optionally, the third duration is used for determining end of a burst; or the third duration is used to indicate a maximum duration of timing of the third timer;
the third timer is a timer for determining end of burst data transmission;
the fourth duration is used for determining end of a data packet set; or the fourth duration is used to indicate a maximum duration of timing of the fourth timer; and
the fourth timer is a timer for determining end of data transmission of the data packet set.

Optionally, the second execution module 131 is configured to perform the first sub-operation of the second operation in a case that a sixth condition is met; where
the sixth condition includes at least one of the following:
a second requirement has been obtained, where the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
the number of data packet sets of each burst is the same, only one data packet set is transmitted in each burst, or M data packet sets are transmitted in each burst; and
the tenth data packet set further meets: being the M-th data packet set or the last data packet set in the second burst; where
M is an integer greater than or equal to 1.

Optionally, the second execution module 131 is configured to perform the second sub-operation of the second operation in a case that a seventh condition is met; where
the seventh condition includes at least one of the following:
the second burst starts;
the 1st data packet in the second burst has been received;
a data packet has been received before the third timer or the third duration expires;
a data packet has been received before the third timer or the third duration expires, and the data packet meets at least one of the following: being not a last data packet of the second burst, being a data packet carrying no second end indication, and being a data packet in the M-th data packet set;
a duration of the second burst ends before the third timer or the third duration expires; and
a next burst starts before the third timer or the third duration expires.
where
the second end indication includes one of the following: a burst end indication and a data packet set end indication.

Optionally, the second execution module 131 is configured to perform the third sub-operation of the second operation in a case that an eighth condition is met; where
the eighth condition includes at least one of the following:
the third timer expires or the third duration for waiting expires; and
a last data packet of the second burst or the tenth data packet set has been received before the third timer or the third duration expires.

Optionally, the last data packet of the second burst is one of the following: an end data packet of the M-th data packet set in the burst; and a data packet, carrying a second end indication, in the M-th data packet set in the burst, where
M is an integer greater than or equal to 1.

Optionally, the seventh condition or the eighth condition further includes at least one of the following:
the number of data packet sets of each burst is the same, only one data packet set is transmitted in each burst, or M data packet sets are transmitted in each burst; and
the tenth data packet set further meets: being the M-th data packet set or the last data packet set in the burst.

Optionally, the second execution module 131 is configured to perform the fourth sub-operation of the second operation in a case that a ninth condition is met; where the ninth condition includes at least one of the following:
the second data packet set starts;
the 1st data packet in the second data packet set has been received;
a data packet has been received before the fourth timer or the fourth duration expires;
a data packet has been received before the fourth timer or the fourth duration expires, and the data packet meets at least one of the following: being not a last data packet of the second data packet set, and being a data packet carrying no second end indication;
a duration of the second data packet set ends before the fourth timer or the fourth duration expires; and
a next data packet set starts before the fourth timer or the fourth duration expires.

Optionally, the second execution module 131 is configured to perform the fifth sub-operation of the second operation in a case that a tenth condition is met; where
the tenth condition includes at least one of the following:
the fourth timer expires or the fourth duration for waiting expires; and
a last data packet of the second data packet set has been received before the fourth timer or the fourth duration expires.

Optionally, the second execution module 131 is configured to determine a terminal energy-saving operation based on a burst end indication in an uplink direction and a burst end indication in a downlink direction.

Optionally, the second execution module 131 is configured to obtain fourth information and perform the first sub-operation, the second sub-operation, the third sub-operation, the fourth sub-operation, and/or the fifth sub-operation of the second operation based on the fourth information; where
the fourth information includes at least one of the following:
a second requirement, where the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
second feature information;
the third duration or the timing duration of the third timer;
the fourth duration or the timing duration of the fourth timer;
an average duration of time intervals between data packets;
a maximum duration of time intervals between data packets; and
a first jitter range.

The second feature information includes at least one of the following:
a period of a burst;
information for indicating at least one: the number of data packet sets of each burst is the same, the number of data packet sets of bursts is different, only one data packet set is transmitted in each burst, or M data packet sets are transmitted in each burst; and
information indicating at least one of the following: all data in one burst are mapped onto one data packet set, all data units in one burst are mapped onto one data packet set, and one data unit is mapped onto one data packet set.

The apparatus 130 for determining end of data transmission provided in this embodiment of this application is capable of implementing the processes implemented in the method embodiments in FIG. 4, with the same technical effects achieved. To avoid repetition, details are not described herein again.

Refer to FIG. 14. FIG. 14 is a schematic structural diagram of an apparatus for determining end of data transmission according to an embodiment of this application; and the apparatus is applied to a third communication device. The third communication device includes but is not limited to a CN network element, including but not limited to an SMF, a PCF, or the like. As shown in FIG. 14, the apparatus 140 for determining end of data transmission includes:
a third execution module 141, configured to perform a third operation, where the third operation includes at least one of the following:
obtaining fifth information;
determining sixth information based on the fifth information, where the sixth information includes at least one of the following: protocol description information or a packet filter of a second object; a first requirement; first feature information; a second requirement; second feature information; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet;
determining and/or transmitting third information and/or fourth information based on at least one of the fifth information and a local configuration; and
binding a PCC rule to an independent QoS flow in a case that the PCC rule contains the fifth information or the information related to the data burst operation;
the third information includes at least one of the following:
   the first requirement;
   first feature information;
   protocol description information or a packet filter of a second object;
   the first duration or the timing duration of the first timer;
   the second duration or the timing duration of the second timer;
   an average duration of time intervals between data packets;
   a maximum duration of time intervals between data packets; and
   a first jitter range.
   information for indicating that a first protocol or a first protocol header supports providing at least one of the following: a first end indication, information used for identifying the end data packet of the burst, and information used for marking a second end indication for the data packet;
   information for indicating activation of a terminal energy-saving operation;
   information for indicating activation of a terminal energy-saving operation;
   information for indicating a burst-based operation or information for indicating a burst information-based operation;
   information for indicating to monitor the end data packet of the burst;
   information for indicating to add a second end indication to the end data packet of the burst; and
   burst information corresponding to a burst to which a data packet belongs and used for indicating to mark the data packet.

The fourth information includes at least one of the following: a second requirement, second feature information, a third duration or a timing duration of a third timer, a fourth duration or a timing duration of a fourth timer, an average duration of time intervals between data packets, a maximum duration of time intervals between data packets, and a first jitter range.

The fifth information includes at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet.

The first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst.

The second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst.

The first feature information includes at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

The second feature information includes at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, where M is an integer greater than or equal to 1.

The packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet.

The protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet.

The first jitter range is a jitter range of time intervals between the data packets.

The first object or the second object includes at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object.

The tenth object includes at least one of the following: a first service data flow, a first QoS subflow, a first QoS flow, or a first QoS flow group; and the first QoS flow group includes a first QoS flow.

Optionally, the third execution module 141 is configured to perform at least one of the following:
based on fifth information of a first-object granularity, determining sixth information of a second-object granularity;
determining the fourth information based on sub-information in the fifth information;
determining the second feature information and/or the second requirement based on the first feature information and/or the first requirement;
determining the first duration and/or the third duration based on the first jitter range and the average duration of the time intervals between the data packets in the burst; and
determining the second duration and/or the fourth duration based on the first jitter range and the average duration of the time intervals between the data packets in the data packet set.

The apparatus 140 for determining end of data transmission provided in this embodiment of this application is capable of implementing the processes implemented in the method embodiments in FIG. 5, with the same technical effects achieved. To avoid repetition, details are not described herein again.

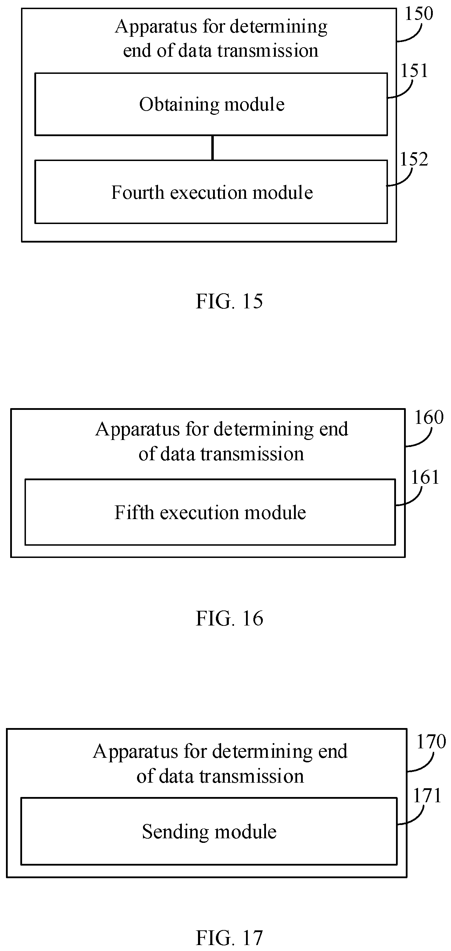

Refer to FIG. 15. FIG. 15 is a schematic structural diagram of an apparatus for determining end of data transmission according to an embodiment of this application; and the apparatus is applied to a fourth communication device. The fourth communication device includes but is not limited to a CN network element, and the CN network element includes but is not limited to a PCF or the like. As shown in FIG. 15, the apparatus 150 for determining end of data transmission includes an obtaining module 151 and a fourth execution module 152.

The obtaining module 151 is configured to obtain seventh information.

The seventh information includes at least one of the following: a first jitter range; an average duration of time intervals between data packets; a maximum duration of time intervals between data packets; feature information of a service data flow; protocol description information or a packet filter of a second object; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet.

The feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

The fourth execution module 152 is configured to perform a fourth operation based on the seventh information, where the performing a fourth operation includes at least one of the following:
determining fifth information; and
sending the fifth information.

The fifth information includes at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet.

The first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst.

The second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst.

The first feature information includes at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

The second feature information includes at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, where M is an integer greater than or equal to 1.

The packet filter includes information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet.

The protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet.

The first jitter range is a jitter range of time intervals between the data packets.

The first object includes at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object.

The tenth object includes at least one of the following: a first service data flow, a first QoS subflow, a first QoS flow, or a first QoS flow group; and the first QoS flow group includes a first QoS flow.

The first jitter range is a jitter range of time intervals between the data packets in the burst.

Optionally, the first duration is used for one of the following: determining end of a burst, determining end of a data unit, and determining end of a data packet set; or the first duration is used to indicate a maximum duration of timing of the first timer. The first timer is a timer used for one of the following: determining end of burst data transmission, determining end of data unit transmission, and determining end of data packet set transmission.

The second duration is used for one of the following: determining end of a data unit, and determining end of a data packet set; or the second duration is used to indicate a maximum duration of timing of the second timer; and the second timer is a timer for determining end of data unit transmission or end of data packet set transmission.

The third duration is used for determining end of a burst; or the third duration is used to indicate a maximum duration of timing of the third timer. The third timer is a timer for determining end of burst data transmission.

The fourth duration is used for determining end of a data packet set; or the fourth duration is used to indicate a maximum duration of timing of the fourth timer. The fourth timer is a timer for determining end of data packet set data transmission.

Optionally, the fourth execution module 152 is configured to perform at least one of the following:
determining at least one of the following based on the feature information of the service data flow: the first requirement, the second requirement, the first feature information, and the second feature information; and
determining at least one of the following based on the first jitter range and the average duration of the time intervals between the data packets in the burst: the first duration and the third duration; and determining at least one of the following based on the first jitter range and the average duration of the time intervals between the data packets in the data packet set: the second duration and the fourth duration.

The apparatus 150 for determining end of data transmission provided in this embodiment of this application is capable of implementing the processes implemented in the method embodiments in FIG. 6, with the same technical effects achieved. To avoid repetition, details are not described herein again.

Refer to FIG. 16. FIG. 16 is a schematic structural diagram of an apparatus for determining end of data transmission according to an embodiment of this application; and the apparatus is applied to a fifth communication device. The fifth communication device includes but is not limited to a CN network element, and the CN network element includes but is not limited to a NEF or the like. As shown in FIG. 16, the apparatus 160 for determining end of data transmission includes:
a fifth execution module 161, configured to disclose a first network capability or disclose a first service.

The first network capability is used for calling and/or providing seventh information by a sixth communication device, and the first service is allowed for inputting seventh information.

The seventh information includes at least one of the following: a first jitter range; an average duration of time intervals between data packets; a maximum duration of time intervals between data packets; feature information of a service data flow; protocol description information or a packet filter of a second object; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet.

The feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1.

The first jitter range is a jitter range of time intervals between the data packets.

The apparatus 160 for determining end of data transmission provided in this embodiment of this application is capable of implementing the processes implemented in the method embodiments in FIG. 7, with the same technical effects achieved. To avoid repetition, details are not described herein again.

Refer to FIG. 17. FIG. 17 is a schematic structural diagram of an apparatus for determining end of data transmission according to an embodiment of this application; and the apparatus is applied to a sixth communication device. The sixth communication device includes but is not limited to a CN network element, and the CN network element includes but is not limited to a NEF, an AF, an NWDAF, or the like. As shown in FIG. 17, the apparatus 170 for determining end of data transmission includes:
a sending module 171, configured to send seventh information.

The seventh information includes at least one of the following: a first jitter range; an average duration of time intervals between data packets; a maximum duration of time intervals between data packets; feature information of a service data flow; protocol description information or a packet filter of a second object; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet.

The feature information includes at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, where N is an integer greater than or equal to 1; and

The first jitter range is a jitter range of time intervals between the data packets.

The apparatus 170 for determining end of data transmission provided in this embodiment of this application is capable of implementing the processes implemented in the method embodiments in FIG. 8, with the same technical effects achieved. To avoid repetition, details are not described herein again.

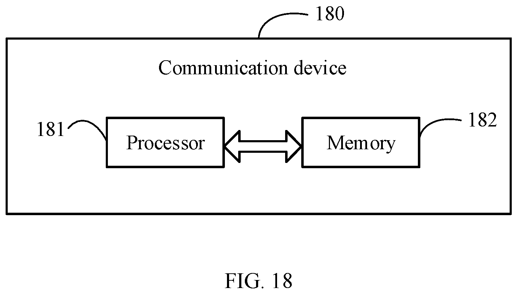

Optionally, as shown in FIG. 18, an embodiment of this application further provides a communication device 180, including a processor 181 and a memory 182, and the memory 182 stores a program or instructions capable of running on the processor 181. When the program or instructions are executed by the processor 181, the steps of the foregoing embodiments of the method for determining end of data transmission may be implemented, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the method for determining end of data transmission are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the method for determining end of data transmission, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the method for determining end of data transmission, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for determining end of data transmission, comprising:
performing, by a first communication device, a first operation, wherein the performing a first operation comprises at least one of the following:
performing a first sub-operation of the first operation, wherein the first sub-operation of the first operation comprises at least one of the following: determining end of a first burst (burst); determining that a first data packet is an end data packet of the first burst; enabling the first data packet to carry a second end indication; and sending the first data packet, the first data packet carrying a second end indication; wherein the second end indication comprises one of the following: an end of burst indication and an end of data packet indication;
performing a second sub-operation of the first operation, wherein the second sub-operation of the first operation comprises at least one of the following: starting or restarting timing of a first timer; and starting or restarting a wait for a first duration;
performing a third sub-operation of the first operation, wherein the third sub-operation of the first operation comprises at least one of the following: stopping timing of the first timer; stopping or waiting for the first duration; determining end of the first burst; determining end of a first data packet set; determining an end data packet of the first burst or the first data packet set; enabling the end data packet to carry a second end indication; sending the end data packet, the end data packet carrying a second end indication; enabling a last received data packet in the first burst to carry a second end indication; sending the last received data packet in the first burst, the data packet carrying a second end indication; constructing a dummy data packet; enabling the dummy data packet to carry a second end indication; and sending the dummy data packet, the dummy data packet carrying a second end indication;
performing a fourth sub-operation of the first operation, wherein the fourth sub-operation of the first operation comprises at least one of the following: starting or restarting timing of a second timer; and starting or restarting a wait for a second duration;
performing a fifth sub-operation of the first operation, wherein the fifth sub-operation of the first operation comprises at least one of the following: stopping timing of a second timer; stopping or waiting for a second duration; determining end of the first data packet set; determining end of a first data unit; determining an end data packet of the first data packet set or the first data unit; enabling an end data packet to carry a data packet set end indication; sending the end data packet, the end data packet carrying a data packet set end indication; enabling a last received data packet in the first data packet set or the first data unit to carry a data packet set end indication; sending the last received data packet in the first data packet set or the first data unit, the data packet carrying a data packet set end indication; constructing a dummy data packet; enabling the dummy data packet to carry a data packet set end indication; and sending the dummy data packet, the dummy data packet carrying a data packet set end indication;
obtaining the first duration or a timing duration of the first timer;
obtaining the second duration or a timing duration of the second timer;
obtaining first information, wherein the first information comprises at least one of the following: an average duration of time intervals between data packets and a first jitter range;
performing a first behavior based on the first information, wherein the first behavior comprises at least one of the following: determining the first duration or the timing duration of the first timer; determining the second duration or the timing duration of the second timer; and determining a maximum duration of transmission time intervals of data packets;
obtaining second information, wherein the second information comprises a maximum duration of time intervals between data packets; and
performing a second behavior based on the second information, wherein the second behavior comprises at least one of the following: determining the first duration or the timing duration of the first timer; and determining the second duration or the timing duration of the second timer; wherein
the first data packet meets at least one of the following:
the first data packet is a data packet in the first data unit or a data packet of the first burst; and
the first data packet is an end data packet of a first data unit; and
the first data packet carries a first end indication; wherein
the first data unit meets at least one of the following: a data unit in the first burst, and a data unit mapped to the first data packet set; and
the first jitter range is a jitter range of time intervals between the data packets.

2. The method according to claim 1, wherein the determining an end data packet of the first burst or the first data packet set comprises at least one of the following:
if the first communication device still has a received data packet of the first burst, using, by the first communication device, a last received data packet in the first burst as the end data packet of the first burst or the first data packet set; and
if the first communication device already has no data packet of the first burst, creating, by the first communication device, one dummy data packet and using the dummy data packet as the end data packet of the first burst or the first data packet set;
and/or
the first duration is used for one of the following: determining end of a burst, determining end of a data unit, and determining end of a data packet set; or the first duration is used to indicate a maximum duration of timing of the first timer;
and/or
the first timer is a timer used for one of the following: determining end of burst data transmission, determining end of data unit transmission, and determining end of data packet set transmission;
and/or
the second duration is used for one of the following: determining end of a data unit and determining end of a data packet set; or the second duration is used to indicate a maximum duration of timing of the second timer;
and/or
the second timer is a timer for determining end of data unit transmission or end of data packet set transmission.

3. The method according to claim 1, wherein
the first jitter range comprises at least one of the following:
a maximum value in jitter positive values of time intervals between data packets; and
a minimum value in jitter negative values of time intervals between data packets.

4. The method according to claim 1, wherein the first end indication is one of the following:
an end indication in a first protocol header;
an end indication of a data unit; and
an end indication of a burst; wherein
the first protocol header comprises one of the following: an IP protocol header of a data packet of the terminal or a protocol header within the IP protocol header, a real-time transport protocol RTP protocol header, an RTP protocol header extension, a secure real-time transport protocol SRTP protocol header, an SRTP protocol header extension, or header information of a protocol indicated by the protocol description information; and/or the first protocol header does not comprise a GPRS tunneling protocol for the user plane GTP-U header.

5. The method according to claim 1, wherein the performing a first sub-operation of the first operation comprises:
performing, by the first communication device, the first sub-operation of the first operation in a case that a first condition is met; wherein
the first condition comprises at least one of the following:
a first requirement has been obtained, wherein the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
the number of data units transmitted in each burst is the same, only one data unit is transmitted in each burst, or N data units are transmitted in each burst;
the first data unit further meets: being the N-th data unit or a last data unit in the first burst;
a service data flow supports a first protocol header, or a data packet of the service data flow has a first protocol header;
a packet filter of a quality of service QoS flow comprises information describing at least one of the following: a first protocol, a first protocol header, and an end indication in the first protocol header;
the first communication device supports reading the first protocol header;
protocol description information or a packet filter of a second object has been obtained;
a first protocol or the first protocol header supports providing at least one of the following: a first end indication, information used for identifying the end data packet of the burst, and information used for marking a second end indication for the data packet;
information for indicating activation of a terminal energy-saving operation has been obtained;
information for indicating a burst-based operation or information for indicating a burst information-based operation has been obtained;
information for indicating to monitor the end data packet of the burst has been obtained;
information for indicating to add a second end indication to the end data packet of the burst has been obtained; and
burst information, corresponding to a burst to which a data packet belongs and used for indicating to mark the data packet, has been obtained; wherein
N is an integer greater than or equal to 1.

6. The method according to claim 1 or 5, wherein the first data unit being a data unit in the first burst comprises one of the following:
a first media unit is a first arrived data unit in the first burst;
the first media unit is the N-th arrived data unit in the first burst; and
the first media unit is a last arrived data unit in the first burst.

7. The method according to claim 1, wherein the performing a second sub-operation of the first operation comprises:
performing, by the first communication device, the second sub-operation of the first operation in a case that a second condition is met; wherein
the second condition comprises at least one of the following:
the first burst starts;
the 1st data packet in the first burst has been received;
a data packet has been received before the first timer or the first duration expires;
a data packet has been received before the first timer or the first duration expires, and the data packet meets at least one of the following: being not a last data packet of the first data packet set or the first burst, being a data packet carrying no first end indication, and being a data packet in the N-th data unit;
a duration of the first burst ends before the first timer or the first duration expires; and
a next burst starts before the first timer or the first duration expires.

8. The method according to claim 1, wherein the performing a third sub-operation of the first operation comprises:
performing, by the first communication device, the third sub-operation of the first operation in a case that a third condition is met; wherein
the third condition comprises at least one of the following:
the first timer expires or the first duration for waiting expires; and
a last data packet of the first data packet set or the first burst has been received before the first timer or the first duration expires.

9. The method according to claim 7 or 8, wherein the last data packet of the first data packet set or the first burst is one of the following: an end data packet of the N-th data unit in the burst; and a data packet carrying a first end indication in the N-th data unit in the burst; wherein
N is an integer greater than or equal to 1.

10. The method according to claim 7 or 8, wherein the second condition or the third condition further comprises at least one of the following:
the number of data units transmitted in each burst is the same, only one data unit is transmitted in each burst, or N data units are transmitted in each burst; and
the first data unit further meets: being the N-th data unit or a last data unit in the burst.

11. The method according to claim 8, wherein in a case that the third sub-operation comprises at least one of constructing a dummy data packet, enabling the dummy data packet to carry a data packet set end indication, and sending the dummy data packet, the dummy data packet carrying a data packet set end indication, the third condition further comprises:
the first communication device already has no data packet in the first burst.

12. The method according to claim 1, wherein the fourth sub-operation of the first operation comprises:
performing, by the first communication device, the fourth sub-operation of the first operation in a case that a fourth condition is met; wherein
the fourth condition comprises at least one of the following:
the first data packet set starts;
the 1st data packet of the first data packet set or the first data unit has been received;
a data packet has been received before the second timer or the second duration expires;
a data packet of the first data packet set or the first data unit has been received before the second timer or the second duration expires, and the data packet meets at least one of the following: being not a last data packet of the first data unit and not carrying a first end indication;
a duration of the first data packet set ends before the second timer or the second duration expires; and
a next data packet set starts before the second timer or the second duration expires.

13. The method according to claim 1, wherein the performing a fifth sub-operation of the first operation comprises:
performing, by the first communication device, the fifth sub-operation of the first operation in a case that a fifth condition is met; wherein
the fifth condition comprises at least one of the following:
the second timer expires or the second duration for waiting expires; and
a last data packet of the first data packet set or the first data unit has been received before the second timer or the second duration expires.

14. The method according to claim 1, wherein the performing a first operation comprises:
obtaining, by the first communication device, third information and performing the first sub-operation, the second sub-operation, the third sub-operation, the fourth sub-operation, and/or the fifth sub-operation of the first operation based on the third information; wherein
the third information comprises at least one of the following:
a first requirement, wherein the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
first feature information;
protocol description information or a packet filter of a second object;
the first duration or the timing duration of the first timer;
the second duration or the timing duration of the second timer;
an average duration of time intervals between data packets;
a maximum duration of time intervals between data packets;
a first jitter range;
information for indicating that a first protocol or a first protocol header supports providing at least one of the following: a first end indication, information used for identifying the end data packet of the burst, and information used for marking a second end indication for the data packet;
information for indicating activation of a terminal energy-saving operation;
information for indicating a burst-based operation or information for indicating a burst information-based operation;
information for indicating to monitor the end data packet of the burst;
information for indicating to add a second end indication to the end data packet of the burst; and
burst information corresponding to a burst to which a data packet belongs and used for indicating to mark the data packet;
wherein
the first feature information comprises at least one of the following:
a period of a burst;
information for indicating at least one: the number of data units transmitted in each burst is the same, the number of data units transmitted in each burst is different, only one data unit is transmitted in each burst, or N data units are transmitted in each burst; and
information indicating at least one of the following: all data in one burst are mapped onto one data packet set, all data units in one burst are mapped onto one data packet set, and one data unit is mapped onto one data packet set; wherein
N is an integer greater than or equal to 1;
wherein
the second object comprises at least one of the following: a first service data flow, a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
the tenth object comprises at least one of the following: a first service data flow, a first QoS subflow, a first QoS flow, and a first QoS flow group;
wherein
the packet filter comprises information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet;
the protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet.

15. The method according to claim 1 or 10, wherein
a maximum duration of time intervals between the data packets comprises at least one of the following: a maximum duration of time intervals between the data packets in a burst, and a maximum duration of time intervals between the data packets in a data packet set;
and/or
an average duration of time intervals between the data packets comprises at least one of the following: an average duration of time intervals between the data packets in a burst, and an average duration of time intervals between the data packets in a data packet set;
and/or
a jitter range of time intervals between the data packets comprises at least one of the following: a jitter range of time intervals between the data packets in a burst, and a jitter range of time intervals between the data packets in a data packet set.

16. The method according to claim 1, wherein
the performing a first behavior based on the first information comprises at least one of the following:
performing, the first communication device, at least one of the following based on an average duration of time intervals between data packets in a burst and/or a jitter range of time intervals between data packets in the burst: determining the first duration or the timing duration of the first timer; determining a maximum duration of the transmission time intervals of the data packets in the burst; determining a maximum duration of transmission time intervals of data packets in a data packet set; and
performing, the first communication device, at least one of the following based on an average duration of time intervals between the data packets in the data packet set and/or a jitter range of the time intervals between the data packets in the data packet set: determining the second duration or the timing duration of the second timer; and determining the maximum duration of the transmission time intervals of the data packets in the data packet set.

17. The method according to claim 1, wherein the performing a second behavior based on the second information comprises at least one of the following:
determining, by the first communication device, the first duration or the timing duration of the first timer based on a maximum duration of transmission time intervals of data packets in a burst or a maximum duration of transmission time intervals of data packets in a data packet set; and
determining, by the first communication device, the second duration or the timing duration of the second timer based on the maximum duration of the transmission time intervals of the data packets in the data packet set.

18. A method for determining end of data transmission, comprising:
performing, by a second communication device, a second operation, wherein the performing a second operation comprises at least one of the following:
performing a first sub-operation of the second operation, wherein the first sub-operation of the second operation comprises at least one of the following: determining end of a second burst, and determining that a second data packet is an end data packet of the second burst; enabling the second data packet to carry a burst end indication; and sending the second data packet, the second data packet carrying a burst end indication;
performing a second sub-operation of the second operation, wherein the second sub-operation of the second operation comprises at least one of the following: starting or restarting timing of a third timer; and starting or restarting a wait for a third duration;
performing a third sub-operation of the second operation, wherein the third sub-operation of the second operation comprises at least one of the following: stopping timing of the third timer; stop waiting for the third duration; determining end of the second burst; determining an end data packet of the second burst; enabling the end data packet to carry a burst end indication; sending the end data packet of the second burst, the end data packet carrying a burst end indication; enabling a last received data packet in the second burst to carry a burst end indication; sending the last received data packet in the second burst, the data packet carrying a burst end indication; constructing a dummy data packet; enabling the dummy data packet to carry a burst end indication; and sending the dummy data packet, the dummy data packet carrying a burst end indication;
performing a fourth sub-operation of the second operation, wherein the fourth sub-operation of the second operation comprises at least one of the following: starting or restarting timing of a fourth timer; and starting or restarting a wait for the fourth duration;
performing a fifth sub-operation of the second operation, wherein the fifth sub-operation of the second operation comprises at least one of the following: stopping timing of a fourth timer; stopping or waiting for a fourth duration; determining end of a second data packet set; determining an end data packet of the second data packet set; enabling the end data packet to carry a data packet set end indication; sending the end data packet, the end data packet carrying a data packet set end indication; enabling a last received data packet in the second data packet set to carry a data packet set end indication; sending the last received data packet in the second data packet set, the data packet carrying a data packet set end indication; constructing a dummy data packet; enabling the dummy data packet to carry a data packet set end indication; and sending the dummy data packet, the dummy data packet carrying a data packet set end indication;
obtaining the third duration or a timing duration of the third timer;
obtaining the fourth duration or a timing duration of the fourth timer;
obtaining first information, wherein the first information comprises at least one of the following: an average duration of time intervals between data packets and a first jitter range;
performing a third behavior based on the first information, wherein the third behavior comprises at least one of the following: determining the third duration or the timing duration of the third timer; determining the fourth duration or the timing duration of the fourth timer; and determining a maximum duration of transmission time intervals of data packets;
obtaining second information, wherein the second information comprises a maximum duration of time intervals between data packets; and
performing a fourth behavior based on the second information, wherein the fourth behavior comprises at least one of the following: determining the third duration or the timing duration of the third timer; and determining the fourth duration or the timing duration of the fourth timer; wherein
the second data packet meets at least one of the following:
the second data packet is a data packet in a tenth data packet set or a data packet of the second burst;
the second data packet is an end data packet of the tenth data packet set; and
the second data packet carries a second end indication; wherein
the tenth data packet set is a data packet set in the second burst;
the second end indication comprises one of the following: a burst end indication and a data packet set end indication; and
the first jitter range is a jitter range of time intervals between the data packets.

19. The method according to claim 18, wherein
the third duration is used for determining end of a burst; or the third duration is used to indicate a maximum duration of timing of the third timer;
the third timer is a timer for determining end of burst data transmission;
the fourth duration is used for determining end of a data packet set; or the fourth duration is used to indicate a maximum duration of timing of the fourth timer; and
the fourth timer is a timer for determining end of data transmission of the data packet set.

20. The method according to claim 18, wherein the performing a first sub-operation of the second operation comprises:
performing, by the second communication device, the first sub-operation of the second operation in a case that a sixth condition is met; wherein
the sixth condition comprises at least one of the following:
a second requirement has been obtained, wherein the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
the number of data packet sets of each burst is the same, only one data packet set is transmitted in each burst, or M data packet sets are transmitted in each burst; and
the tenth data packet set further meets: being the M-th data packet set or the last data packet set in the second burst; wherein
M is an integer greater than or equal to 1.

21. The method according to claim 18, wherein the performing a second sub-operation of the second operation comprises:
performing, by the second communication device, the second sub-operation of the second operation in a case that a seventh condition is met; wherein
the seventh condition comprises at least one of the following:
the second burst starts;
the 1st data packet in the second burst has been received;
a data packet has been received before the third timer or the third duration expires;
a data packet has been received before the third timer or the third duration expires, and the data packet meets at least one of the following: being not a last data packet of the second burst, being a data packet carrying no second end indication, and being a data packet in the M-th data packet set;
a duration of the second burst ends before the third timer or the third duration expires; and
a next burst starts before the third timer or the third duration expires;
wherein
the second end indication comprises one of the following: a burst end indication and a data packet set end indication.

22. The method according to claim 18, wherein the third sub-operation of the second operation comprises:
performing, by the second communication device, the third sub-operation of the second operation in a case that an eighth condition is met; wherein
the eighth condition comprises at least one of the following:
the third timer expires or the third duration for waiting expires; and
a last data packet of the second burst or the tenth data packet set has been received before the third timer or the third duration expires.

23. The method according to claim 21 or 22, wherein the last data packet of the second burst is one of the following: an end data packet of the M-th data packet set in the burst; and a data packet carrying a second end indication in the M-th data packet set in the burst; wherein
M is an integer greater than or equal to 1.

24. The method according to claim 21 or 22, wherein the seventh condition or the eighth condition further comprises at least one of the following:
the number of data packet sets of each burst is the same, only one data packet set is transmitted in each burst, or M data packet sets are transmitted in each burst; and
the tenth data packet set further meets: being the M-th data packet set or the last data packet set in the burst.

25. The method according to claim 18, wherein the performing a fourth sub-operation of the second operation comprises:
performing, by the second communication device, the fourth sub-operation of the second operation in a case that a ninth condition is met; wherein
the ninth condition comprises at least one of the following:
the second data packet set starts;
the 1st data packet in the second data packet set has been received;
a data packet has been received before the fourth timer or the fourth duration expires;
a data packet has been received before the fourth timer or the fourth duration expires, and the data packet meets at least one of the following: being not a last data packet of the second data packet set, and being a data packet carrying no second end indication;
a duration of the second data packet set ends before the fourth timer or the fourth duration expires; and
a next data packet set starts before the fourth timer or the fourth duration expires.

26. The method according to claim 18, wherein the performing a fifth sub-operation of the second operation comprises:
performing, by the second communication device, the fifth sub-operation of the second operation in a case that a tenth condition is met; wherein
the tenth condition comprises at least one of the following:
the fourth timer expires or the fourth duration for waiting expires; and
a last data packet of the second data packet set has been received before the fourth timer or the fourth duration expires.

27. The method according to claim 18, wherein the performing a second operation further comprises:
determining a terminal energy-saving operation based on a burst end indication in an uplink direction and a burst end indication in a downlink direction.

28. The method according to claim 18, wherein the performing a second operation comprises:
obtaining, by the second communication device, fourth information and performing the first sub-operation, the second sub-operation, the third sub-operation, the fourth sub-operation, and/or the fifth sub-operation of the second operation based on the fourth information; wherein
the fourth information comprises at least one of the following:
a second requirement, wherein the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
second feature information;
the third duration or the timing duration of the third timer;
the fourth duration or the timing duration of the fourth timer;
an average duration of time intervals between data packets;
a maximum duration of time intervals between data packets; and
a first jitter range;
wherein
the second feature information comprises at least one of the following:
a period of a burst;
information for indicating at least one: the number of data packet sets of each burst is the same, the number of data packet sets of bursts is different, only one data packet set is transmitted in each burst, or M data packet sets are transmitted in each burst; and
information indicating at least one of the following: all data in one burst are mapped onto one data packet set, all data units in one burst are mapped onto one data packet set, and one data unit is mapped onto one data packet set.

29. A method for determining end of data transmission, comprising:
performing, by a third communication device, a third operation, wherein the third operation comprises at least one of the following:
obtaining fifth information;
determining sixth information based on the fifth information, wherein the sixth information comprises at least one of the following: protocol description information or a packet filter of a second object; a first requirement; first feature information; a second requirement; second feature information; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation, information for indicating to add a second end indication to the end data packet of the burst, and burst information corresponding to a burst to which a data packet belongs and used for indicating to mark the data packet;
determining and/or transmitting third information and/or fourth information based on at least one of the fifth information and a local configuration; and
binding a PCC rule to an independent QoS flow in a case that the PCC rule contains the fifth information or the information related to the data burst operation;
wherein
the third information comprises at least one of the following:
the first requirement;
the first feature information;
the protocol description information or a packet filter of a second object;
the first duration or the timing duration of the first timer;
the second duration or the timing duration of the second timer;
an average duration of time intervals between data packets;
a maximum duration of time intervals between data packets; and
a first jitter range;
information for indicating that a first protocol or a first protocol header supports providing at least one of the following: a first end indication, information used for identifying the end data packet of the burst, and information used for marking a second end indication for the data packet;
information for indicating activation of a terminal energy-saving operation;
information for indicating activation of a terminal energy-saving operation;
information for indicating a burst-based operation or information for indicating a burst information-based operation;
information for indicating to monitor the end data packet of the burst;
information for indicating to add a second end indication to the end data packet of the burst; and
burst information corresponding to a burst to which a data packet belongs and used for indicating to mark the data packet; wherein
the fourth information comprises at least one of the following: a second requirement, second feature information, a third duration or a timing duration of a third timer, a fourth duration or a timing duration of a fourth timer, an average duration of time intervals between data packets, a maximum duration of time intervals between data packets, and a first jitter range; wherein
the fifth information comprises at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet; wherein
the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst; and
the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst; wherein
the first feature information comprises at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the second feature information comprises at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, wherein M is an integer greater than or equal to 1; wherein
the packet filter comprises information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet; wherein
the protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet;
the first jitter range is a jitter range of time intervals between the data packets;
the first object or the second object comprises at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
the tenth object comprises at least one of the following: a first service data flow, a first QoS subflow, a first QoS flow, or a first QoS flow group; and the first QoS flow group comprises a first QoS flow.

30. The method according to claim 29, wherein the performing sixth information based on the fifth information comprises at least one of the following:
based on fifth information of a first-object granularity, determining sixth information of a second-object granularity;
determining the fourth information based on sub-information in the fifth information;
determining the second feature information and/or the second requirement based on the first feature information and/or the first requirement;
determining the first duration and/or the third duration based on the first jitter range and the average duration of the time intervals between the data packets in the burst; and
determining the second duration and/or the fourth duration based on the first jitter range and the average duration of the time intervals between the data packets in the data packet set.

31. A method for determining end of data transmission, comprising:
obtaining, by a fourth communication device, seventh information; and
performing, the fourth communication device, a fourth operation based on the seventh information; wherein
the seventh information comprises at least one of the following:
a first jitter range;
an average duration of time intervals between data packets;
a maximum duration of time intervals between data packets; and
feature information of a service data flow;
protocol description information or a packet filter of a second object;
information for indicating that a first protocol or a first protocol header supports providing at least one of the following: a first end indication, information for identifying an end data packet of a burst, and information for marking a second end indication for a data packet;
information for indicating activation of a terminal energy-saving operation;
information for indicating a data burst-based operation;
information for indicating to add a second end indication to the end data packet of the burst; and
burst information corresponding to a burst to which a data packet belongs and used for indicating to mark the data packet; wherein
the feature information comprises at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the performing a fourth operation comprises at least one of the following:
determining fifth information; and
sending the fifth information; wherein
the fifth information comprises at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet;
the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
the first feature information comprises at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the second feature information comprises at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, wherein M is an integer greater than or equal to 1;
the packet filter comprises information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet;
the protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet;
the first jitter range is a jitter range of time intervals between the data packets;
the first object comprises at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
the tenth object comprises at least one of the following: a first service data flow, a first QoS subflow, a first QoS flow, or a first QoS flow group; and the first QoS flow group comprises a first QoS flow; wherein
the first jitter range is a jitter range of time intervals between the data packets in the burst.

32. The method according to claim 31, wherein
the first duration is used for one of the following: determining end of a burst, determining end of a data unit, and determining end of a data packet set; or the first duration is used to indicate a maximum duration of timing of the first timer, and the first timer is a timer used for one of the following: determining end of burst data transmission, determining end of data unit transmission, and determining end of data packet set transmission;
the second duration is used for one of the following: determining end of a data unit, and determining end of a data packet set; or the second duration is used to indicate a maximum duration of timing of the second timer; and the second timer is a timer for determining end of data unit transmission or end of data packet set transmission;
the third duration is used for determining end of a burst; or the third duration is used to indicate a maximum duration of timing of the third timer; and the third timer is a timer for determining end of burst data transmission; and
the fourth duration is used for determining end of a data packet set; or the fourth duration is used to indicate a maximum duration of timing of the fourth timer; and the fourth timer is a timer for determining end of data packet set data transmission.

33. The method according to claim 31, wherein the performing a fourth operation based on the seventh information comprises at least one of the following:
determining at least one of the following based on the feature information of the service data flow: the first requirement, the second requirement, the first feature information, and the second feature information; and
determining at least one of the following based on the first jitter range and the average duration of the time intervals between the data packets in the burst: the first duration and the third duration; and determining at least one of the following based on the first jitter range and the average duration of the time intervals between the data packets in the data packet set: the second duration and the fourth duration.

34. An information determining method, comprising:
disclosing, by a fifth communication device, a first network capability or disclosing a first service; wherein
the first network capability is used for calling and/or providing seventh information by a sixth communication device, and the first service is allowed for inputting the seventh information; wherein
the seventh information comprises at least one of the following:
a first jitter range;
an average duration of time intervals between data packets;
a maximum duration of time intervals between data packets;
feature information of a service data flow;
protocol description information or a packet filter of a second object;
information for indicating that a first protocol or a first protocol header supports providing at least one of the following: a first end indication, information for identifying an end data packet of a burst, and information for marking a second end indication for a data packet;
information for indicating activation of a terminal energy-saving operation;
information for indicating a data burst-based operation;
information for indicating to add a second end indication to the end data packet of the burst; and
burst information corresponding to a burst to which a data packet belongs and used for indicating to mark the data packet; wherein
the feature information comprises at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the first jitter range is a jitter range of time intervals between the data packets.

35. An information determining method, comprising:
sending, by a sixth communication device, seventh information; wherein
the seventh information comprises at least one of the following:
a first jitter range;
an average duration of time intervals between data packets;
a maximum duration of time intervals between data packets;
feature information of a service data flow;
protocol description information or a packet filter of a second object;
information for indicating that a first protocol or a first protocol header supports providing at least one of the following: a first end indication, information for identifying an end data packet of a burst, and information for marking a second end indication for a data packet;
information for indicating activation of a terminal energy-saving operation;
information for indicating a data burst-based operation;
information for indicating to add a second end indication to the end data packet of the burst; and
burst information corresponding to a burst to which a data packet belongs and used for indicating to mark the data packet;
wherein
the feature information comprises at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the first jitter range is a jitter range of time intervals between the data packets.

36. An apparatus for determining end of data transmission, comprising:
a first execution module, configured to perform a first operation, wherein the performing a first operation comprises at least one of the following:
performing a first sub-operation of the first operation, wherein the first sub-operation of the first operation comprises at least one of the following: determining end of a first burst (burst); determining that a first data packet is an end data packet of the first burst; enabling the first data packet to carry a second end indication; and sending the first data packet, the first data packet carrying a second end indication; wherein the second end indication comprises one of the following: a burst end indication and a data packet set end indication;
performing a second sub-operation of the first operation, wherein the second sub-operation of the first operation comprises at least one of the following: starting or restarting timing of a first timer; and starting or restarting a wait for a first duration;
performing a third sub-operation of the first operation, wherein the third sub-operation of the first operation comprises at least one of the following: stopping timing of the first timer; stopping or waiting for the first duration; determining end of the first burst; determining end of a first data packet set; determining an end data packet of the first burst or the first data packet set; enabling the end data packet to carry a second end indication; sending the end data packet, the end data packet carrying a second end indication; enabling a last received data packet in the first burst to carry a second end indication; sending the last received data packet in the first burst, the data packet carrying a second end indication; constructing a dummy data packet; enabling the dummy data packet to carry a second end indication; and sending the dummy data packet, the dummy data packet carrying a second end indication;
performing a fourth sub-operation of the first operation, wherein the fourth sub-operation of the first operation comprises at least one of the following: starting or restarting timing of a second timer; and starting or restarting a wait for a second duration;
performing a fifth sub-operation of the first operation, wherein the fifth sub-operation of the first operation comprises at least one of the following: stopping timing of a second timer; stopping or waiting for a second duration; determining end of the first data packet set; determining end of a first data unit; determining an end data packet of the first data packet set or the first data unit; enabling an end data packet to carry a data packet set end indication; sending the end data packet, the end data packet carrying a data packet set end indication; enabling a last received data packet in the first data packet set or the first data unit to carry a data packet set end indication; sending the last received data packet in the first data packet set or the first data unit, the data packet carrying a data packet set end indication; constructing a dummy data packet; enabling the dummy data packet to carry a data packet set end indication; and sending the dummy data packet, the dummy data packet carrying a data packet set end indication;
obtaining the first duration or a timing duration of the first timer;
obtaining the second duration or a timing duration of the second timer;
obtaining first information, wherein the first information comprises at least one of the following: an average duration of time intervals between data packets and a first jitter range;
performing a first behavior based on the first information, wherein the first behavior comprises at least one of the following: determining the first duration or the timing duration of the first timer; determining the second duration or the timing duration of the second timer; and determining a maximum duration of transmission time intervals of data packets;
obtaining second information, wherein the second information comprises a maximum duration of time intervals between data packets; and
performing a second behavior based on the second information, wherein the second behavior comprises at least one of the following: determining the first duration or the timing duration of the first timer; and determining the second duration or the timing duration of the second timer; wherein
the first data packet meets at least one of the following:
the first data packet is a data packet in the first data unit or a data packet of the first burst; and
the first data packet is an end data packet of a first data unit; and
the first data packet carries a first end indication; wherein
the first data unit meets at least one of the following: a data unit in the first burst, and a data unit mapped to the first data packet set; and
the first jitter range is a jitter range of time intervals between the data packets.

37. An apparatus for determining end of data transmission, comprising:
a second execution module, configured to perform a second operation, wherein the performing a second operation comprises at least one of the following:
performing a first sub-operation of the second operation, wherein the first sub-operation of the second operation comprises at least one of the following: determining end of a second burst, and determining that a second data packet is an end data packet of the second burst; enabling the second data packet to carry a burst end indication; and sending the second data packet, the second data packet carrying a burst end indication;
performing a second sub-operation of the second operation, wherein the second sub-operation of the second operation comprises at least one of the following: starting or restarting timing of a third timer; and starting or restarting a wait for a third duration;
performing a third sub-operation of the second operation, wherein the third sub-operation of the second operation comprises at least one of the following: stopping timing of the third timer; stop waiting for the third duration; determining end of the second burst; determining an end data packet of the second burst; enabling the end data packet to carry a burst end indication; sending the end data packet of the second burst, the end data packet carrying a burst end indication; enabling a last received data packet in the second burst to carry a burst end indication; sending the last received data packet in the second burst, the data packet carrying a burst end indication; constructing a dummy data packet; enabling the dummy data packet to carry a burst end indication; and sending the dummy data packet, the dummy data packet carrying a burst end indication;
performing a fourth sub-operation of the second operation, wherein the fourth sub-operation of the second operation comprises at least one of the following: starting or restarting timing of a fourth timer; and starting or restarting a wait for the fourth duration;
performing a fifth sub-operation of the second operation, wherein the fifth sub-operation of the second operation comprises at least one of the following: stopping timing of a fourth timer; stopping or waiting for a fourth duration; determining end of a second data packet set; determining an end data packet of the second data packet set; enabling the end data packet to carry a data packet set end indication; sending the end data packet, the end data packet carrying a data packet set end indication; enabling a last received data packet in the second data packet set to carry a data packet set end indication; sending the last received data packet in the second data packet set, the data packet carrying a data packet set end indication; constructing a dummy data packet; enabling the dummy data packet to carry a data packet set end indication; and sending the dummy data packet, the dummy data packet carrying a data packet set end indication;
obtaining the third duration or a timing duration of the third timer;
obtaining the fourth duration or a timing duration of the fourth timer;
obtaining first information, wherein the first information comprises at least one of the following: an average duration of time intervals between data packets and a first jitter range;
performing a third behavior based on the first information, wherein the third behavior comprises at least one of the following: determining the third duration or the timing duration of the third timer; determining the fourth duration or the timing duration of the fourth timer; and determining a maximum duration of transmission time intervals of data packets;
obtaining second information, wherein the second information comprises a maximum duration of time intervals between data packets; and
performing a fourth behavior based on the second information, wherein the fourth behavior comprises at least one of the following: determining the third duration or the timing duration of the third timer; and determining the fourth duration or the timing duration of the fourth timer; wherein
the second data packet meets at least one of the following:
the second data packet is a data packet in a tenth data packet set or a data packet of the second burst;
the second data packet is an end data packet of the tenth data packet set; and
the second data packet carries a second end indication; wherein
the tenth data packet set is a data packet set in the second burst;
the second end indication comprises one of the following: a burst end indication and a data packet set end indication; and
the first jitter range is a jitter range of time intervals between the data packets.

38. An apparatus for determining end of data transmission, comprising:
a third execution module, configured to perform a third operation, wherein the third operation comprises at least one of the following:
obtaining fifth information;
determining sixth information based on the fifth information, wherein the sixth information comprises at least one of the following: protocol description information or a packet filter of a second object; a first requirement; first feature information; a second requirement; second feature information; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; and a first jitter range;
determining and/or transmitting third information and/or fourth information based on at least one of the fifth information and a local configuration; and
binding a PCC rule to an independent QoS flow in a case that the PCC rule contains the fifth information or the information related to the data burst operation; wherein
the third information comprises at least one of the following: a first requirement; first feature information; protocol description information or a packet filter of a second object; a first duration or a timing duration of a first timer; a second duration or a timing duration of a second timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a burst-based operation or information for indicating a burst information-based operation, information for indicating to monitor the end data packet of the burst, information for indicating to add a second end indication to the end data packet of the burst, and burst information corresponding to a burst to which a data packet belongs and used for indicating to mark the data packet;
the fourth information comprises at least one of the following: a second requirement, second feature information, a third duration or a timing duration of a third timer, a fourth duration or a timing duration of a fourth timer, an average duration of time intervals between data packets, a maximum duration of time intervals between data packets, and a first jitter range; and
the fifth information comprises at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; and a first jitter range; wherein
the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst; and
the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst; wherein
the first feature information comprises at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the second feature information comprises at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, wherein M is an integer greater than or equal to 1; wherein
the packet filter comprises information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet; wherein
the protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet;
the first jitter range is a jitter range of time intervals between the data packets;
the first object or the second object comprises at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
the tenth object comprises at least one of the following: a first service data flow, a first QoS subflow, a first QoS flow, or a first QoS flow group; and the first QoS flow group comprises a first QoS flow.

39. An apparatus for determining end of data transmission, comprising:
an obtaining module, configured to obtain seventh information; and
a fourth execution module, configured to perform a fourth operation based on the seventh information; wherein
the seventh information comprises at least one of the following:
a first jitter range;
an average duration of time intervals between data packets;
a maximum duration of time intervals between data packets;
feature information of a service data flow;
protocol description information or a packet filter of a second object;
information for indicating that a first protocol or a first protocol header supports providing at least one of the following: a first end indication, information for identifying an end data packet of a burst, and information for marking a second end indication for a data packet;
information for indicating activation of a terminal energy-saving operation;
information for indicating a data burst-based operation;
information for indicating to add a second end indication to the end data packet of the burst; and
burst information corresponding to a burst to which a data packet belongs and used for indicating to mark the data packet; wherein
the feature information comprises at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the performing a fourth operation comprises at least one of the following:
determining fifth information; and
sending the fifth information; wherein
the fifth information comprises at least one of the following: a first requirement; a second requirement; first feature information; second feature information; a packet filter of the first object; a first duration or a timing duration of a first timer; a second duration or a timing duration of a second timer; a third duration or a timing duration of a third timer; a fourth duration or a timing duration of a fourth timer; an average duration of time intervals between data packets; a maximum duration of time intervals between data packets; a first jitter range; and information for indicating that a first protocol or a first protocol header supports providing at least one of the following: a first end indication, information for identifying an end data packet of a burst, information for marking a second end indication for a data packet, information for indicating activation of a terminal energy-saving operation, information for indicating a data burst-based operation, information for indicating to add a second end indication to the end data packet of the burst, and burst information corresponding to a burst to which a data packet belongs and used for indicating to mark the data packet;
the first requirement is used for requesting one of the following: using an end data packet of the N-th data unit in a burst as an end data packet of the burst, using end of the N-th data unit in the burst as end of the burst, using the N-th data packet carrying a first end indication as the end data packet of the burst, and using an arrival time of the N-th data packet carrying the first end indication as end of the burst;
the second requirement is used for requesting one of the following: using an end data packet of the M-th data packet set in a burst as an end data packet of the burst, using end of the M-th data packet set in the burst as end of the burst, using the M-th data packet carrying a second end indication in the burst as the end data packet of the burst, and using an arrival time of the M-th data packet carrying the second end indication as end of the burst;
the first feature information comprises at least one of the following: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the second feature information comprises at least one of the following: a period of the burst; information for indicating at least one: the number of data packet sets of each burst is the same, the number of data packet sets of bursts is different, only one data packet set is transmitted in each burst, or M data packet sets are transmitted in each burst; and information indicating at least one of the following: all data in one burst are mapped onto one data packet set, all data units in one burst are mapped onto one data packet set, and one data unit is mapped onto one data packet set, wherein M is an integer greater than or equal to 1;
wherein
the packet filter comprises information for describing at least one of the following: the first protocol; the first protocol header; an end indication in the first protocol header; a data packet of the N-th data unit in the burst, the data packet carrying an end indication in the first protocol header; a protocol or a protocol header used by a service data flow; a protocol or protocol header for monitoring the end data packet of the burst; and information for indicating that the first protocol or the first protocol header supports providing at least one of the following: a first end indication, information for identifying the end data packet of the burst, and information for adding a second end indication to a data packet;
the protocol description information is used for at least one of the following:
describing a protocol or protocol header used for the second object;
describing a protocol or protocol header used for monitoring the end data packet of the burst; and
indicating that the first protocol or the first protocol header supports providing at least one of the following: a first end indication, information used for identifying the end data packet of the burst, and information used for adding a second end indication to the data packet;
the first jitter range is a jitter range of time intervals between the data packets;
the first object comprises at least one of the following: a first QoS flow, a first QoS subflow, a first QoS flow group, a data packet set, a burst, a burst end, a data packet set end, a data unit end, a data packet set in a tenth object, a burst in the tenth object, a burst end in the tenth object, a data packet set end in the tenth object, and a data unit end in the tenth object; and
the tenth object comprises at least one of the following: a first service data flow, a first QoS subflow, a first QoS flow, or a first QoS flow group; and the first QoS flow group comprises a first QoS flow; wherein
the first jitter range is a jitter range of time intervals between the data packets in the burst.

40. An apparatus for determining end of data transmission, comprising:
a fifth execution module, configured to disclose a first network capability or disclose a first service; wherein
the first network capability is used for calling and/or providing seventh information by a sixth communication device, and the first service is allowed for inputting the seventh information; wherein
the seventh information comprises at least one of the following:
a first jitter range;
an average duration of time intervals between data packets;
a maximum duration of time intervals between data packets;
feature information of a service data flow;
protocol description information or a packet filter of a second object;
information for indicating that a first protocol or a first protocol header supports providing at least one of the following: a first end indication, information for identifying an end data packet of a burst, and information for marking a second end indication for a data packet;
information for indicating activation of a terminal energy-saving operation;
information for indicating a data burst-based operation;
information for indicating to add a second end indication to the end data packet of the burst; and
burst information corresponding to a burst to which a data packet belongs and used for indicating to mark the data packet; wherein
the feature information comprises at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the first jitter range is a jitter range of time intervals between the data packets.

41. An apparatus for determining end of data transmission, comprising:
a sending module, configured to send seventh information; wherein
the seventh information comprises at least one of the following:
a first jitter range;
an average duration of time intervals between data packets;
a maximum duration of time intervals between data packets;
feature information of a service data flow;
protocol description information or a packet filter of a second object;
information for indicating that a first protocol or a first protocol header supports providing at least one of the following: a first end indication, information for identifying an end data packet of a burst, and information for marking a second end indication for a data packet;
information for indicating activation of a terminal energy-saving operation;
information for indicating a data burst-based operation;
information for indicating to add a second end indication to the end data packet of the burst; and
burst information corresponding to a burst to which a data packet belongs and used for indicating to mark the data packet; wherein
the feature information comprises at least one: a period of the burst; information for indicating at least one: the number of data units transmitted in each burst is the same, the number of data units transmitted in each burst is different, only one data unit is transmitted in each burst, or N data units are transmitted in each burst; and information indicating at least one of the following: all data in one burst are mapped onto one data packet set, all data units in one burst are mapped onto one data packet set, and one data unit is mapped onto one data packet set, wherein N is an integer greater than or equal to 1; and
the first jitter range is a jitter range of time intervals between the data packets.

42. A communication device, comprising a processor and a memory, wherein the memory stores a program or instructions capable of running on the processor, and when the program or the instructions are executed by the processor, the steps of the method for determining end of data transmission according to any one of claims 1 to 17, or the steps of the method for determining end of data transmission according to any one of claims 18 to 28, or the steps of the method for determining end of data transmission according to any one of claims 29 to 30, or the steps of the method for determining end of data transmission according to any one of claims 31 to 33, or the steps of the method for determining end of data transmission according to claim 34, or the steps of the method for determining end of data transmission according to claim 35 are implemented.

43. A readable storage medium, wherein the readable storage medium stores a program or instructions, and when the program or instructions are executed by a processor, the steps of the method for determining end of data transmission according to any one of claims 1 to 17, or the steps of the method for determining end of data transmission according to any one of claims 18 to 28, or the steps of the method for determining end of data transmission according to any one of claims 29 to 30, or the steps of the method for determining end of data transmission according to any one of claims 31 to 33, or the steps of the method for determining end of data transmission according to claim 34, or the steps of the method for determining end of data transmission according to claim 35 are implemented.
